(19) **Europäisches Patentamt**
**European Patent Office**
**Office européen des brevets**

(11) **EP 1 844 258 B1**

(12) **EUROPEAN PATENT SPECIFICATION**

(45) Date of publication and mention
of the grant of the patent:
**06.01.2021 Bulletin 2021/01**

(51) Int Cl.:
**F16L 55/165** (2006.01)   **B29C 63/10** (2006.01)

(21) Application number: **05808821.2**

(86) International application number:
**PCT/GB2005/050204**

(22) Date of filing: **21.11.2005**

(87) International publication number:
**WO 2006/064284 (22.06.2006 Gazette 2006/25)**

(54) **SYSTEMS AND METHODS FOR MAKING PIPE LINERS**

SYSTEME UND VERFAHREN ZUM HERSTELLEN VON ROHRLINERN

SYSTEMES ET PROCEDES DE FABRICATION DE MANCHONS DE TUYAU

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **13.12.2004 US 635467 P
12.01.2005 US 33962
01.07.2005 US 172132
14.10.2005 US 250305**

(43) Date of publication of application:
**17.10.2007 Bulletin 2007/42**

(60) Divisional application:
**10183621.1 / 2 273 171**

(73) Proprietor: **Smart Pipe Company, LP.**
**Houston, TX 77002 (US)**

(72) Inventors:
• **CATHA, Stephen, Crockett**
**Houston, TX 77007-5080 (US)**
• **CHARBONEAU, Kenneth, Ray**
**Slidell, LA 70458-9042 (US)**
• **GALLAGHER, James, Louis**
**Little Compton, RI 02837-1119 (US)**
• **MANDICH, Ivan, Capistran**
**Metarie, LA 70005-4223 (US)**
• **STRINGFELLOW, William, Doyle**
**Houston, TX 77042-2931 (US)**

(74) Representative: **Lucas, Phillip Brian**
**Lucas & Co.**
**135 Westhall Road**
**Warlingham, Surrey CR6 9HJ (GB)**

(56) References cited:
DE-A1- 2 442 449          DE-A1- 3 610 752
DE-A1- 4 427 633          US-A- 3 099 190
US-A- 3 823 590           US-A- 3 905 398
US-A- 4 123 928           US-A- 5 551 484
US-A- 5 762 450           US-A1- 2002 124 898
US-A1- 2003 051 795

**Description**

FIELD OF THE FIRST AND THIRD INVENTIONS

The present invention relates to a liner for installation within a host pipeline, and to a method of lining a pipeline.

BACKGROUND OF THE INVENTION

Pipeline and/or underground transport of liquids and gases has been utilized for many years. Such pipeline and/or underground transport has proven to be an efficient and safe manner in which to transport potentially explosive, flammable, and/or toxic liquids (e.g. crude oil) and gases (e.g. methane and propane) over long distances. One method for providing such long distance underground transport has been through metal tubes and pipes. In the past, the utilization of metals (such as steel, copper, lead, and the like) was effective from cost and raw material supply perspectives. However, with the population growing throughout the world and the necessity for transporting liquids and gases to more locations increases, the continued utilization of such metal articles has become more and more difficult for a number of reasons. Initially, the production of such metal tubes and pipes is done with high temperature production methods at specific foundries which are often located a substantial distance from the desired installation site. Such off site production can require transport of cumbersome metal articles to an installation location and then subsequent placement into already dug channels. These procedures can be difficult to follow since metal articles are rather heavy and must be connected together to form the desired pipeline. Additionally, in order to reduce the number of connections between individual pipes, longer metal pipes could be formed, which adds to the complexity with an increase in required welded connections. Further problems associated with metal pipes and tubes include the potential for internal and external corrosion (which may contaminate the transported liquid or gas), the low threshold of earth shifting resistance which could cause a break within the pipeline, and the difficulty in replacing worn out metal pipes in sections, again due to the metal pipe weight, metal pipe length, and connection welds. These problems have proven to be extremely troublesome in certain geographic areas which are susceptible to earthquakes and tremors on a regular basis. When unexpected earthquakes have occurred in the past, the metal gas and liquid pipelines have not proven to be flexible enough to withstand the shear forces applied thereto and explosions, leaks, or discontinued supplies to such areas have resulted. These metal articles have remained in use because of their ability to withstand high pressures. Furthermore, although such metal pipes are designed to withstand such high pressures (e.g. above 80 bars) once a crack develops within the actual metal pipe structure, it has been found that such cracks easily propagate and spread in size and possibly number upon the application of continued high pressure to the same weakened area. In such an instance, failure of the pipe is therefore imminent unless closure is effectuated and repairs or replacements are undertaken.

Although there is a need to produce new pipelines in various locations around the world, there is also a growing need to replace the now deteriorating pipelines already in use. Aging pipelines have recently caused concern as to the safety of utilizing such old articles. Unexpected explosions have occurred with tragic consequences. Thorough review and replacement of some old metal pipes is thus necessary. Some of these older pipelines were constructed in what were rural areas but are now heavily populated urban areas, thus increasing the risk associated with a failure. There is a desire to completely replace old pipelines following the same exact routes. In heavily populated areas, the dig and replace method becomes extremely difficult, inconvenient and costly.

Due to the difficulties noted above, there is a need to develop pipeline materials that are safer, longer lasting, easier to install, non corroding, non crack propagating, and more flexible. To date, there have been some thermosetting or thermoplastic articles which are designed for such applications. These include certain fiber wound reinforcement materials (including fiberglass, poly aramids, polyesters, polyamides, carbon fibers, and the like). However, the resultant articles do not include specific fabric reinforcements (they are fibers wound around specific layers of plastic material) and thus are difficult and rather costly to produce. Furthermore, such fiber wound materials often cannot be easily produced at the pipe installation site due to the complexity of creating fiber wound reinforcement articles subsequent to thermoplastic or thermosetting layer production. Additionally, with off site production, transport and in ground placement can be a difficult problem. Thus, although some improvements have been provided in the past in relation and in comparison to metal pipes and tubes, there simply is no viable alternative presented to date within the pertinent prior art known to the present inventor which accords the underground liquid and gas transport industry a manner of replacing or restoring such high pressure metal articles.

Pipe liners have been used in a variety of applications to stop further degradation of a pipeline due to internal corrosion, to provide improved resistance to abrasion, and to stop leakage at joints. Pipe liners are generally designed to resist only installation loadings and to serve as a pressure barrier for transported fluids. Operating loadings are transferred directly to the wall of, and resisted by, a host pipe that may have already exceeded its design life. Pipe liners typically do not restore the operating parameters of a pipeline. Pipe liners come in a variety of known forms. These include cured in place pipes ("CIPP"). The CIPP product is a fiber reinforcement that is impregnated with an un cured thermosetting resin that is used primarily in sewer and watermain rehabilitation. The CIPP is inserted into the host pipeline and expanded into contact with the host pipe walls and then cured, often by pumping heated water through the CIPP which is reinforced by the pipeline. CIPP liners are designed to resist only the installation forces and typically do not contribute, or add significantly to, to the strength of the host pipeline. Further they generally do not provide protection against external corrosion. Examples of this type of pipe liner are disclosed in U.S. Patents 4,064,211 and 6,708,729 (and in prior art cited therein). The use of such pipe liners is well documented in the industry literature and is not applicable to the high pressure applications.

Another type of prior art pipe liner is the extruded thermoplastic pipe liner. These products are continuous lengths of thermoplastic material such as HDPE (high density polyethylene), nylon, PVC (polyvinylchloride) alloys, and other such materials commonly used for piping applications and/or corrosion mitigation. These materials are sometimes used in combination, that is, multiple layers of different materials, or with discrete length fiber reinforcement, to obtain improved properties. Limitations of this type of product are that it relies on the strength of a host pipeline to resist operating stresses; it has limited tensile strength and can therefore be pulled into a host pipeline only in relatively short lengths, usually one mile or less; and it cannot provide protection against external corrosion. A further limitation of this type of product is the ability of fluids to permeate through the wall. All thermoplastics are permeable to some degree. Gases that permeate tend to be collected in a space at the pipe liner host-pipe interface where pressure can increase to a level approaching the operating pressure of the pipeline. When the pipeline pressure is suddenly reduced, the entrapped gas follows the normal gas laws and expands. Such expansion, often results in a buckling of the pipe liner called "liner collapse". As a result, pipelines with polymer pipe liners are normally equipped with "venting systems" and operational procedures are established to "vent" permeated fluids (see, e.g. U.S. Patent 5,072,622 which describes a method for removal of such gases before they are able to collapse a pipe liner). Methods developed to install thermoplastic pipe liners include swage lining, the use of sized rollers and liner tension to reduce the pipe liner diameter (see, e.g. U.S. Patent 6,240,612), and the "fold and form" method in which the round liner is folded into a "C," "H," "W," "U" or other shape for insertion (see, e.g. U.S. Patents 4,863,365; 4,985,196; 4,998,871 and 6,058,978). Applications involving the use of such pipe liners are well documented in the industry literature.

Another well-known pipe liner product and method for rehabilitation of pipelines is the flexible yet rigid spoolable composite pipe member which can be pulled or otherwise inserted into a host pipe. The spoolable composite pipe is of significantly smaller diameter than the host pipe to allow it to be installed. This pipe and method of installation can provide increased pipeline pressure rating and increased internal and external corrosion resistance, but can result in a significant reduction in the effective inside diameter of the host pipe. This results in an increase in pipeline operating costs. An additional significant limitation of this product is the difficulty of road transport of rigid spoolable pipe sizes greater than about four inches in diameter in sufficient continuous length to be cost effective (see, e.g. U.S. Patents 3,769,127; 4,053,343, 5,755,266; 5,828,003 and 6,065,540).

Another well-known documented pipe liner product and method for the rehabilitation of pipelines is reinforced thermoplastic pipe which can be inserted or otherwise pulled into a host pipe. This product typically consists of an extruded thermoplastic liner that is reinforced by fiber or tapes which are protected by a cover. This relatively flexible, yet rigid, pipe and method can provide increased pipeline pressure rating and increased internal and external corrosion resistance, but can result in a significant reduction in the effective inside diameter of the host pipe, and in increased pipeline operating costs. Another limitation of this method is the difficulty of road transport of rigid pipe sizes greater than about four inches in diameter in sufficient continuous length to be cost effective (see, e.g. U.S. Patents 2,502,638; 4,000,759; 4,384,595; 5,072,622; and 6,305,423).

Wound-fiber reinforced plastic pipe is commonly available in a variety of forms, including discrete length products in which a specific length of pie, e.g. 30-feet, is produced and continuous length products, often referred to as "Spoolable Composite Pipe" or "SCP." One common type of SCP utilizes a polymer liner or core pipe reinforced by layers of wound-fibers in a polymer matrix, e.g. epoxy or polyester, see, e.g. U.S. Patents 6,782,932, 5,933,945, 5,921,285, 4,384,595, 4,142,352 and 4,120,324. Another common type of SCP has a polymer liner or core pipe reinforced by wound-tapes or fibers using an orbital process in which material is pulled from bobbins or rolls that orbit a polymer liner as it translates through the apparatus; see, e.g. U.S. Patents 2,502,638, 3,616,072 4,259,139 and 4,495,018 and U.S. Patent Application Pub. No. 20040144440, U.S. Ser. No. 351,350 filed Jan. 27, 2003.

US 2002/124898 A1 discloses a reinforcement liner and methods of manufacturing the liner. The liner includes a fabric material having first and second fibers in a single layer. The second fibers comprise chopped fibers in substantially parallel alignment for being positioned substantially about the circumference of a pipe, so the fabric can be elongated in a direction parallel to the second fibers. The liner may includes a stitching material that is used to couple the first and second fibers together. The stitching material is preferably an elastic yarn.

DE 36 10752 A1 discloses a plastic support sheet comprising bumps or knobs. Sections of the plastic support sheet can be folded into a tubular shape and inserted into a section of sewer pipe that requires renovation. The bumps or knobs on the plastic sheet stand it off the inside of the sewer pipe forming an annular space. The annular space is filled with cement to repair the sewer pipe.

SUMMARY OF THE INVENTION

According to the present invention there is provided a liner for installation in a host pipeline as set out in claim 1. Further features of the liner as set out in claims 2 to 38 to which attention is hereby directed.

According to another aspect of the invention there is provided a method for lining a pipeline as set out in claim 39. Further steps of the method are set out in claims 40 to 43 to which attention is hereby directed.

The present disclosure, in at least certain embodiments, describes pipe liners, methods to make them, methods to install them, and lined pipe or pipelines with a multi-component liner and, in one aspect, a fiber optic sensor system and/or a communications system, e.g. a fiber optic communications system.

Certain pipe liners produced in accordance with certain embodiments of the disclosure are a stand alone structure which is capable of withstanding operating and installation loadings and, optionally, with embedded measurement and redundant sensing devices for monitoring the integrity of a restored pipeline on a continuous basis. The present disclosure also discloses lined pipe and pipelines with the capability for communications/control through a communication system, e.g. a fiber optic communication system with fiber optic cables and/or apparatus, in one aspect with collection and removal apparatus of any permeated fluids. In certain particular aspects, pipelines (e.g. relatively large diameter degraded pipelines) which are restored to original or near-original specification without digging and without replacement.

In at least certain aspects of the disclosure, a light weight high strength yet flexible multi-component pipe liner structure can be installed as a stand alone pipe liner restoring a pipe or a host pipeline to (or near) its original performance parameters and original service life, while providing increased internal and external corrosion protection and increased protection from damage, e.g. during earthquakes, accidents, and acts of terrorism. In certain aspects, a "stand alone" pipe liner as used herein is a pipe liner that withstands all (or substantially all) installation and operational loads without assistance.

In at least certain aspects there is a described a liner with sufficient axial strength to allow for the lining of existing pipelines with lengths in excess of several miles (e.g. in excess of five miles or in excess of ten miles), in one aspect with single pull installation.

In at least certain aspects there is described an apparatus and structure within a pipe or pipeline for collecting and handling permeated fluids, especially gases, that might otherwise cause the pressure barrier to collapse when pipeline pressure is reduced (and, in some cases, suddenly reduced).

In certain aspects, there is disclosed a stand-alone reinforced thermoplastic pipe liner of continuous length with: a layer of polymeric material; two or more layers of fabric reinforcement material; an axial strengthener [e.g. axial tapes (in one aspect, fiber tapes) or socks, or flattened tubes, e.g., in certain aspects, made from carbon fiber based material, or any suitable high strength fiber or material disclosed herein] for pulling and increasing strength; orbitally wound fibers to lock the tapes in relationship to the fabric reinforcement; optionally, one or a series of fiber optic cables; and, optionally such cables covered by a protective layer, e.g. a protective polymer layer, which, in certain aspects mitigates installation damage and provides structure for collecting and removing permeated fluids. Optionally a liner according to the present invention includes a thin layer of thermoplastic film interiorly of **the polymeric** cover and/or on the or an outermost layer of fabric reinforcement material (e.g., but not limited to SARAN (TM) material). In certain aspects a pipe liner according to the present invention is designed for long term service (fifty years or more) at maximum allowable operating pressures up to 2,000 psi (136 bar) with safety factors in the range from 2.8 to 3.8 against Short Term Burst.

In one particular aspect a first layer of a pipe liner is a first polymeric layer which is an extruded cylindrical thermoplastic or modified thermosetting resin material, such as polyolefin, polyamides, polyvinyl chlorides and alloys thereof, HDPE and polymeric materials that have sufficient resistance to chemical attack and strength to be used in applications involving the transport of hydrocarbons and water. Such materials are readily available worldwide and have had extensive usage in the transportation of natural gas, hydrocarbons and water. An extruded cylinder is produced in long, yet transportable, lengths for ease of inspection and transport to the fabrication site. These discrete length cylinders of polymeric material are welded together, e.g. butt fusion welded, to form a continuous-length inner pressure barrier for the pipe liner. The weld is accomplished using existing technology in conjunction with, preferably, rapid cooling techniques, to increase the process speed. Both the external and internal weld beads are, optionally, removed during the process and each weld is subjected to a 100 % volumetric non destructive integrity test.

Application of internal pressures to the non reinforced cylinder results in an expansion of the diameter thereby thinning the wall thickness to the point of breaking, or the pressure is discontinued. Extruded thermoplastic pipe liners used in the past have relied upon the wall thickness of the host pipe to restrict expansion and support the applied pressure without damaging the pipe liner. Development of reinforced plastic pipe has shown that reinforcement applied over the extruded liner allows the pipe to resist higher pressures. In certain aspects of a liner according to the present invention, the first polymeric layer has a ratio of cylinder outside diameter to wall thickness, sometimes referred to as the Standard Dimensional Ratio ("SDR"), within the range from 26 to 36. This ratio allows handling of the cylinder without buckling while enhancing the desired flexibility of the pipe liner.

Reinforcement added to the first layer cylinder of the pipe liner is two or at least two layers of fabric (preferably, but not necessarily, unidirectional fabric) applied under tension and, in one aspect, at essentially equal but opposite angles (that is, plus and minus the same angle, with respect to the pipe liner axis). In certain aspects, each layer of reinforcement of the pipe liner is a single width of fabric. Each width of fabric can have several individual thicknesses of reinforcement material. In certain aspects the material used is one of several advanced reinforcement fiber materials commonly referred to as "ballistic materials" or "extended chain polyethylene ballistic material". This material is light weight, exhibits high specific strength, high specific stiffness, low elongation or stretch, and is similar, in some aspects, to the inner liner material.

In certain aspects, the width of the fabric is determined by the relationship:

$$\text{Coverage = WN / } \pi \text{Dcos} \varnothing$$

where W is the width of the fabric, N is the number of layers of fabric, D is the outside diameter of the pipe liner and Ø is the fabric winding angle. N = 1 for one layer. For example, in one particular case:

$$\text{Coverage = W / } \pi \text{Dcos} \varnothing \text{ for N = 1.}$$

For 100% coverage: Coverage = 1.00 and Cos Ø = width / D
e.g. for a pipe liner with

  D = 114.3 mm (4.500 inches) and
  Width = 203.2 mm (8.00 inches),

then Cos Ø = 203.2/(3.1416) (114.3) = 0.5659 and Ø = 55.53°.

For certain aspects of the disclosure, the desired coverage is 100 percent and the nominal value of ranges between 50 and 85 degrees, e.g., in one aspect, 54.7 degrees. The outside diameter of the pipe liner increases with each reinforcement layer resulting in a required increase in the fabric width for each layer. With multiple fabric layers with relatively smaller widths, 100% coverage can still be achieved. (In the above example, using two layers -- N = 2 -- and fabric width of 101.6 mm (4.0 inches), the same coverage is achieved. For certain aspects of the disclosure, the angle may be adjusted slightly to produce 100 percent coverage using a single fabric width. In one aspect a thin polyolefin liner (e.g. a layer 10 as described below) resists pressure until the reinforcement becomes loaded and the further increase in pressure is transferred to the reinforcement. This transfer in loading appears to take place at approximately one third of the maximum allowable operating pressure.

Because the materials of construction may have extremely low coefficients of friction, the first reinforcement layer is, optionally, locally bonded to the inner liner and the reinforcement layer(s) are bonded to each other, e.g. using any suitable adhesive, e.g. a glue or rapidly curing adhesive and/or tape. Bonding takes place at one, two, three, four or more independent narrow axial strips (or intermittent amounts of glue or adhesive) equally spaced on the circumference of the substrate. In certain aspects the total width of the axial strips makes up no more than 10% of the circumference of the inner liner (first layer cylinder). The limited bonding is used to maintain the flexibility of the pipe liner while holding the reinforcements in place during subsequent manufacturing operations and installation.

To permit long lengths of the pipe liner to be installed using a single pull, in certain aspects, one or a plurality, e.g. between 2 and 8 tapes, socks, or tubes (e.g. carbon fiber tape) are spaced around and on top of the fabric reinforcement and bonded to the surface, e.g. using a rapidly curing adhesive. A second set or layer (and in one aspect a third) of tapes may, optionally, be installed on top of the first. The actual number of tapes will vary depending upon the pipe liner diameter and desired tensile strength. In certain aspects, the tape used is a near 100% unidirectional fiber tape produced from high modulus high strength carbon fibers. In certain aspects relatively stiff fiber tape is used with a matrix material (e.g. epoxy or similar material). In certain aspects no matrix or filler material is used and the tapes are soft and flexible. In certain aspects, fiber bundles or tows range from 12,000 to 50,000 filaments and multiple tows are used. The fibers may be stitched together. Each of the pulling tapes is laid on the pipe, e.g. in a substantially axial or zero degree position with respect to the axis of the pipe liner. In certain aspects, the actual angle with respect to the axis will be in the range from 0 to 10 degrees. In one aspect, the pulling tapes are configured and located so that, when a completed liner is folded, e.g. into a "C" shape, for insertion into a pipe, the pulling tapes help maintain the liner in the "C" shape during such insertion.

In one embodiment, with the tapes installed, high strength ballistic material fiber tows are orbitally wound on top of the tapes to secure them in place. This over wrapping need not provide 100% coverage. In certain aspects, the angle of the tows is ± 54.7° nominally and in the range of 50° to 80° . Fiber tows are used to help fix the fiber tapes' relationship with the reinforcement and ensure that the low coefficient of the ballistic fiber fabric and tape will not permit relative movement between the two. Fixing the relationship between the reinforcement fabric and the carbon fiber tapes (or socks or tubes) insures that both materials strain at the same or substantially the same rate, provides additional tensile strength for pulling, and allows greater hoop loading of the fabric.

With the reinforcement in place, components of a continuous measuring, monitoring and communications systems are, optionally, bonded to the pipe surface. This system is intended, in certain aspects, to allow monitoring on a continuous or intermittent basis as determined by the pipeline operator. The system is a fiber optics system. In certain aspects this system is attached to the pipe as a continuous thermoplastic tape, with each tape including two fiber optic cables (one for temperature, one for strain) or four fiber optic cables (two plus two additional cables for redundancy). One half of the fiber optic cables are further enclosed within a tubular void space into which the cables are placed. The other half is embedded within the thermoplastic material. The monitoring system, in one aspect, has a minimum of one such tape and, in one aspect, has at least two such tapes located at 90° to each other and placed on the pipe axially and/or helically. The fiber optic cables enclosed within the tube are designed to allow distributed temperature measurement over great distances. Only one fiber optic cable is required for temperature measurement, the other (s) are redundant and can be used to replace a damaged cable if and when necessary. In one aspect, the fiber optic sensors will respond to localized changes in temperature with an accuracy of about 2.22 K (4°F) and locate the position of the temperature anomaly within about 1.83 m (six feet). Changes in temperature reflect a leak or impending leak. The half of the fiber optic sensor(s) embedded within the thermoplastic tape is used to measure localized strains along the length of the pipe. Again, only a single fiber optic cable is required for this measurement, the others are provided for redundancy. The strain sensor, in one aspect, is embedded in the tape which is anchored to the pipe liner wall. Changes in strain level of the pipe liner are measured to an accuracy of about 20 micro strain and the position of the anomaly is located within a small range, e.g. within about 1.83 m (six feet). The data from this sensor, correlated with long term test data (e.g. from regression analysis, e.g. from an ASTM D 2992 test, allows a determination of the integrity of the pipe liner on a continuous basis and further allows corrective action to be taken before a failure or incident occurs.

In addition to the monitoring system, additional fiber optic cables can be provided, according to the disclosure, for use in a communications and control system. These fiber optic cables can be included within the tapes mentioned or within separate tapes. Such a system with these fiber optic cables provides a communications and control function to be used to interface with a control/monitor system, remote or on-site, e.g. a pipeline supervisory control and data acquisition ("SCADA") system and to operate pipeline devices and controllers. Pipeline valves, external to a pipe liner according to the present invention, can be controlled using these cables. In one aspect, the sensors and communications lines are integrated through an existing operating system to provide for control, indications of potential problems, automatic alarms and/or shut down of the pipeline or of apparatuses thereon.

The monitoring system package and reinforcement is, optionally, protected by a polymeric cover or jacket that, in one aspect, is formed from a sheet of material whose width is approximately the same as the circumference of a reinforced pipe liner made, e.g. of polyolefin, nylon, polyvinyl chloride (PVC), high density polyethylene and the like. The sheet, in one aspect, is rolled to form a continuous cylinder that fits tightly around the pipe and is welded to itself to prevent incursion of external debris and or fluids. The cover is on top of the fiber optic packages to protect them from wear and handling damage during folding and pulling into the host pipe. Alternatively a cover is made by coating the structure with a layer of plastic or similar material, e.g., but not limited to, polyurethane, e.g. polyurethane S-355 from IR Products. Such material may be sprayed on, extruded on with a crosshead extruder, or painted on.

This placement results in an annular space between the pipe reinforcement and the inside of the cover sheet due to the presence therebetween of the fiber optic sensors. Spacers are, optionally, placed between the sensor tapes as necessary to support the cover (e.g., separate spacers made of plastic, wood, extruded thermoplastic or thermosetting material or spacers that are integral to a cover). Additionally, in certain aspects, these spacers are, optionally, shaped to permit the accumulation of permeated fluids from the flowing fluid to be vacuumed at an external vent port so there is no accumulation of pressure that might result in damage to the pipe liner. Monitoring the amount of fluid removed and/or pressure relieved provides an additional indication of the integrity of the pipe liner.

BRIEF DESCRIPTION OF THE DRAWINGS

A more particular description of embodiments of the invention briefly summarized above may be had by references to the embodiments which are shown in the drawings which form a part of this specification. These drawings illustrate certain preferred embodiments and are not to be used to improperly limit the scope of the invention which may have other equally effective or equivalent embodiments.

Fig. 1 is a cross-section view of a liner according to the present invention.
Figs. 2 - 5 are side views of components of the liner of Fig. 1.

Figs. 6, 7, 7A, 8, 9, 12, and 14 are cross-sections views of components of a liner as in Fig. 5.

Fig. 10 is a cross-section view of a prior art fiber optic cable.

Figs. 11A and 11B are schematic drawings of systems used with liners according to the present invention.

Fig. 13 shows shapes for spacers according to the present invention.

Fig. 15 is a schematic view of a method for producing a liner according to the present invention.

Fig. 16A is a perspective view of a system according to the present invention.

Fig. 16B is an exploded view of part of the system of Fig. 16A.

Fig. 16C is an enlarged view of part of the system of Fig. 16A.

Fig. 16D is an enlarged view of part of the system of Fig. 16A.

Fig. 16E is a first side view of part of the system of Fig. 16A.

Fig. 16F is a top view of part of the system of Fig. 16A.

Fig. 16G is a front view of part of the system of Fig. 16A.

Fig. 16H is a second side view of part of the system of Fig. 16A.

Fig. 17A is a perspective view of a concentric shaft of the system of Fig. 16A.

Fig. 17B is a perspective exploded view of the concentric a shaft of Fig. 17A.

Fig. 18A is a perspective view of a split core of the system of Fig. 16A.

Fig. 18B is a front view of the split core of Fig. 18A.

Fig. 19A is a perspective view of a deflection arm assembly of the system of Fig. 16A.

Fig. 19B is a first side view of the assembly of Fig. 19A.

Fig. 19C is a back view of the assembly of Fig. 19A.

Fig. 19D is a front view of the assembly of Fig. 19A.

Fig. 19E is a second side view of the assembly of Fig. 19A.

Fig. 19F is a top view of the assembly of Fig. 19A.

Fig. 19G is a bottom view of the assembly of Fig. 19A.

Fig. 19H is a perspective view of the assembly of Fig. 19A.

Fig. 20A is a perspective view which illustrates a material path for the system of Fig. 16A.

Fig. 20B is a top view of the path of Fig. 20A.

Fig. 20C is a perspective view which illustrates a material path for the system of Fig. 16A.

Fig. 20D is a top view of the path of Fig. 20C.

Fig. 21A is a perspective view of part of the system of Fig. 16A showing a step in its operation.

Fig. 21B is a perspective view of part of the system of Fig. 16A showing a step in its operation.

Fig. 21C is a perspective view of part of the system of Fig. 16A showing a step in its operation.

Fig. 21D is a perspective view of part of the system of Fig. 16A showing a step in its operation.

Fig. 21E is a perspective view of part of the system of Fig. 16A showing a step in its operation.

Fig. 21F is a perspective view of part of the system of Fig. 16A showing a step in its operation.

Fig. 21G is a perspective view of part of the system of Fig. 16A showing a step in its operation.

Fig. 21H is a perspective view of part of the system of Fig. 16A showing a step in its operation.

Fig. 21I is a perspective view of part of the system of Fig. 16A showing a step in its operation.

## DETAILED DESCRIPTION OF PREFERRED EMBODIMENTS

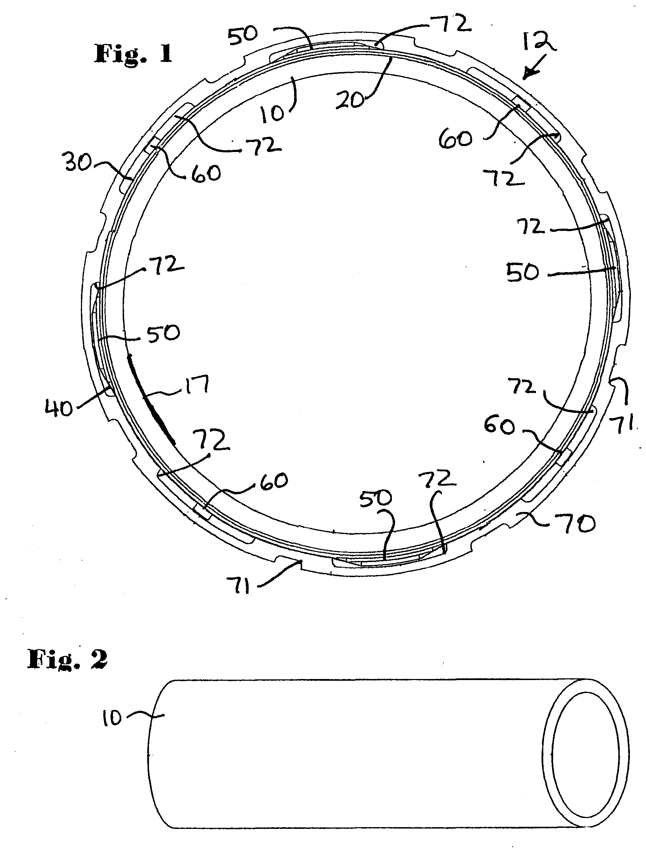

A pipe liner 12 according to the present invention as shown in Fig. 1 has an innermost first layer 10 (which when formed is a hollow cylinder, in one aspect, a deformable/re-formable cylinder), a second layer 20, a third layer 30, fiber strands 40, spacers 50, fiber optic cables 60, and a cover 70.

As shown in Figs. 1 and 2, the first layer 10 is a generally cylindrical member made of flexible material sufficiently strong to support the other layers and components and sufficiently flexible to be compressed, deformed, and re-formed. In one particular aspect the first layer 10 is extruded HDPE (e.g. any suitable grade; e.g. PE 3408, PE 100), with an outside-diameter-to wall-thickness ratio SDR of about 32.5 in hollow cylindrical form. In certain aspects the lined pipe is between 101.6 mm (4") and 762 mm (30") in O.D. and, in other aspects, the pipe that is lined is standard size (iron pipe size or IPS) and has an O.D. between 152.4 mm (6") and 406.4 mm (16"). In one particular aspect, 15.24 m (fifty foot) lengths of such first layers are commercially available. In certain aspects a fluid-resistant thermoplastic material is used for the first layer that resists fluids being transported through a pipeline or pipe. NYLON 6 (Trademark) material, RILSAN (Trademark) material, or NYLON 11 (Trademark) material or other suitable thermoplastic material may be used for the first layer.

In certain embodiments, lengths of the first layer 10 are welded together on-site at a location at which the liner 12 is to be installed within a pipe or pipeline. In one aspect the lengths of the first layer 10 are butt fusion welded and while the welds are still hot weld beads are smoothed out and/or removed both inside and outside the layer 10. Optionally, the welded area is tested on-site for integrity, e.g., but not limited to, with known ultrasonic testing apparatus.

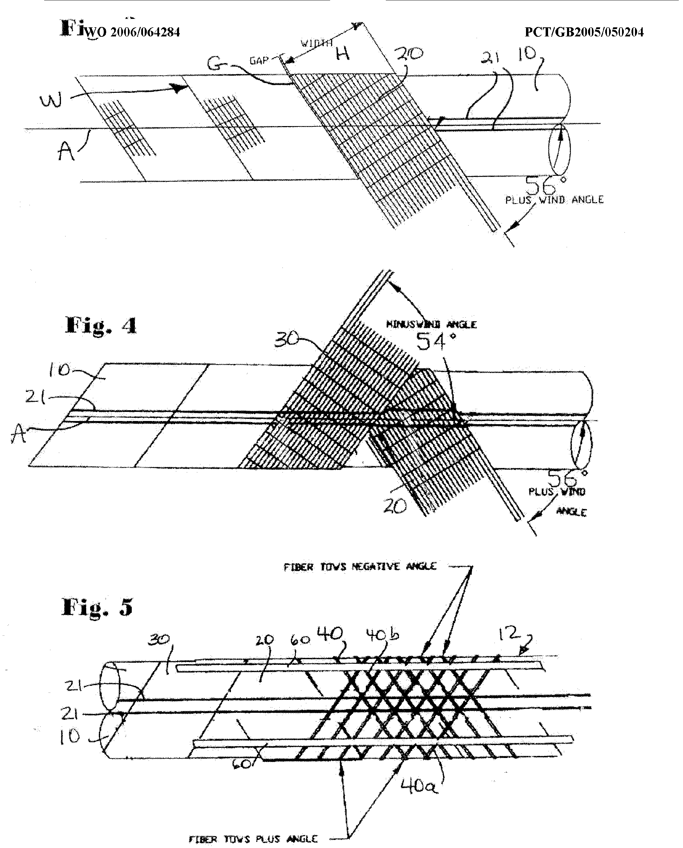

As shown in Figs. 1 and 3, the first layer 10 is wrapped with the second layer 20 which is a layer of material for strengthening the liner 12. Suitable materials for the second layer 20 include fabric with highly oriented HMPE fibers ("HMPE": high molecular weight polyethylene); or ultra high molecular weight Polyethylene ("UHMPE"); SPECTRA (Trademark) material; KEVLAR (Trademark) material; ARAMID (Trademark) material; VECTRAN (Trademark) material; liquid crystal polymer ("LCP") material; DYNEEMA (Trademark) material; TWARON (Trademark) material; TECHNORA (Trademark) material; fiber-reinforcing material, e.g. carbon fibers, fiberglass fibers and/or hybrid fibers; fabric made from carbon fibers and/or glass fibers; and fabric made from carbon fibers and SPECTRA (Trademark) fibers. In certain particular aspects, SPECTRA (Trademark) material, commercially available from Honeywell Company is used because it has a weight-to-volume ratio of 9688 kg/m$^3$ (0.035 lbs/in$^3$). In certain particular aspects, commercially available para-aramid material is used which has a weight-to-volume ratio of 14116 kg/m$^3$ (0.051 lbs/in$^3$). In certain particular aspects, commercially available carbon-fiber reinforced material is used which has a weight-to-volume ratio of 14116 kg/m$^3$ (0.051 lbs/in$^3$). The thickness of layers 20 and 30, in certain aspects, ranges between 0.254 mm and 6.096 mm (0.010 and 0.240 inches) and in one particular aspect is 0.610 mm (0.024 inches). In one aspect the layer 20 and/or the layer 30 are highly oriented high molecular weight polyethylene ("HMWPE").

The second layer 20 is wrapped around the first layer 10, in certain aspects at a wrap angle (or wind angle) between 45 degrees and 85 degrees. In other aspects this wrap angle is between 50 degrees and 60 degrees and, in one particular aspect, this angle is 54.7 degrees. As shown in Fig. 3, the wind angle is designated "plus" to indicate its orientation with respect to a longitudinal axis A of the layer 10 and the wind angle is 56 degrees. Edges of each wrap are butted up against edges of adjacent wraps so no part of the second layer overlaps itself (see, e.g. butting up indicated by arrow W, Fig. 3). Alternatively, a minimal overlap is used; or there is a gap G as shown in Fig. 3. Each wrap of the layer 20 has a width H). Optionally, one, two, three, four, five, six, seven, eight or more tapes, strips, or lines of adhesive or glue 21 are applied on the liner 10. It is to be understood that the entire layer 20 can, according to the present invention, be wrapped around the layer 10 with no gap between wrap edges; with an overlap of some edges; with a gap between all adjacent wrap edges; or with a combination of gap between some edges, overlap of some edges, and/or no gap between others. In certain aspects in which the layer 20 (and/or the layer 30 discussed below) have unidirectional (oriented at the same angle or in the same direction) fibers, the layer 20 is applied so that the fibers are oriented generally at an angle to the longitudinal axis A, in one aspect, at the same angle as the wind angle. By employing no such overlap, overall effective diameter of the liner 12 is reduced. Alternatively, the second layer 20 is wrapped with space between adjacent wrap edges, rather than butting edges against each other which also results in no overlap. In some such aspects, space between adjacent wrap edges is no more than 3% of the total liner surface area.

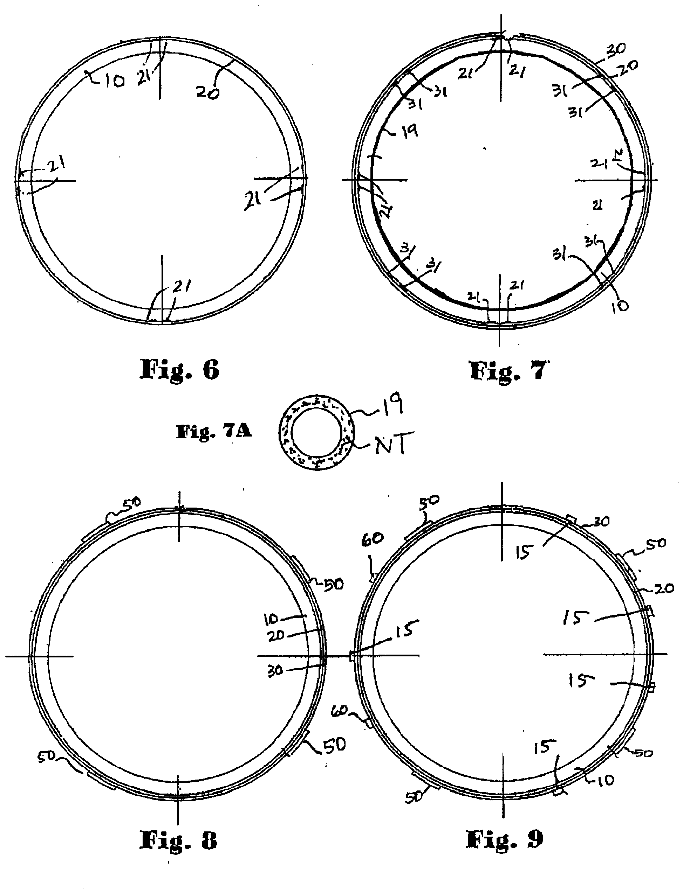

Optionally, as shown in Figs. 3 and 6, one or more lines or strips of glue, adhesive, or tape 21 may be applied to the first layer 10, either intermittently or from one end of the first layer 10 to the other, either in straight lines (as shown) or wrapped around the first layer 10, to inhibit or prevent slippage of the second layer 20 on the first layer 10. In an embodiment in which SPECTRA (Trademark) fiber material is used with axial carbon fibers, these lines 21 tie the axial carbon fibers to the SPECTRA (Trademark) fibers so the two function at the same strain rate which allows the carbon fibers to strengthen the fabric. In certain aspects a commercially available modified cyanoacrylate type of glue is used, from Loctite Company for the lines 21. As shown in Fig. 6, eight lines 21 are used; but any desired number (e.g. 1, 2, 3, 5, 10, etc.) may be used. In one aspect the lines 21 are sprayed on. In certain aspects the lines 21 (and 31) are applied so that the liner 12 is still sufficiently flexible that it can be deformed and re-formed as desired. In one aspect two, three, four, five or more pairs of two lines are used spaced apart around the circumference. In certain aspects the tape(s) 21 are applied by wrapping machine(s), which in one aspect, are concentric wrapping machines and, alternatively, may be orbital wrapping machines. In certain aspects with relatively large diameter tubulars, multiple machines are used to apply multiple tapes side-by-side, to form one layer.

As shown in Figs. 1, 4 and 7 the third layer 30 is wrapped over the second layer 20 and may be wrapped in any of the ways described for the second layer 20 and may be material as described for the second layer 20, with or without lines, etc. 21 on the layer 20 as described for the layer 10. In one aspect both the second layer 20 and the third layer 30 are SPECTRA (Trademark) material about 0.024 inches thick. In certain aspects the third layer 30, as shown in Fig. 4, is wrapped at a wrap angle opposite to that of the second layer 20 (designated "minus" to illustrate its orientation with respect to the axis A and in a direction opposite to that of the layer 20; and, as shown at a wind or wrap angle of minus 54 degrees). Also, as shown in Fig. 7 (not to scale) in an end view, lines 31 (like the lines 21) may be used between the second layer 20 and the third layer 30.

As shown in Figs. 1, 5 and 8 one, two, three, four, five twenty, thirty, thirty six, forty or more fiber strands (or "tows") 40 are used, e.g. wound on the third layer 30 (and/or on the layer 20 and/or on the tapes 50) to strengthen the liner 12 and to facilitate its integrity while it is being pulled into a pipeline. Any suitable fiber may be used. It is within the scope of the present invention to apply strands or tows 40 at different wind angles on a liner 12. Strands 40a are at a plus wind angle and strands 40b are at a negative wind angle.

In certain particular aspects the strands 40 are commercially available fiber tows, which are wound on the liner 12. With the fibers 40 glued or otherwise adhered in place, the fibers 40 and the remaining components form a single integral body which can react to and withstand strain so that creep (undesired movement) of the third layer 30 is reduced and axial loads on the liner 12 are partially absorbed by the tapes 50 thereby reducing strain on the other layers.

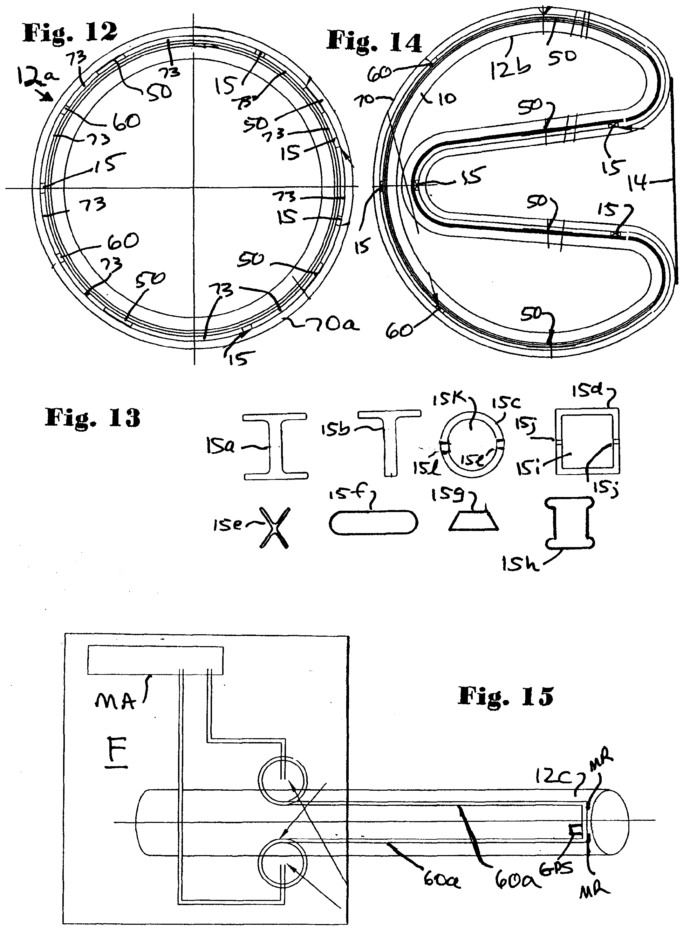

Optionally, as shown in Figs. 1, 5 and 8, tapes 50 (or socks or tubes) (or stacks of two, three or more tapes 50) may be applied to the third layer 30. Optionally, one or some strands 40 are applied over the layer 20, over the layer 30, and/or over the tapes 50. The strands 40 when used over the tapes 50 tie the tapes 50 to the lower layers. In one particular aspect a first tape or first tapes 50 are applied on the layer 30 then a layer of strands 40 (described below) ties the tapes 50 in place. Then one or more additional tapes 50 is applied over the strands 40 and additional (one or more) strands 40 tie the additional tapes 50 in place. These tapes 50 also enhance the ability of the liner 12 to be pulled into a pipeline. In one particular aspect the tape 50 is carbon fiber tape, about 1.50 inches wide, about 0.040 inches thick, and eight such tapes 50 are used equally spaced around the circumference of the liner and extending in straight lines from one end thereof to the other (or 4 pairs of 2 tapes stacked one on the other are used). The tapes 50 (and the fibers 40) can be equally spaced around the liner circumference or not; e.g. Figs. 8 and 9 show a cross-section view with particular spacing for the tapes 50. The spacing for the tapes 50 as shown in Fig. 9 facilitates the maintenance of a folded liner 12 (insertable into a pipe or pipe line) in a general "C" shape as described below (see Fig. 14).

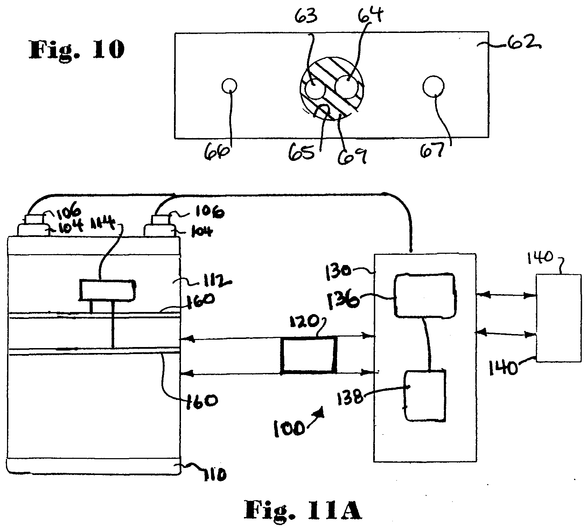

As shown in Figs. 1 and 9, fiber optic cables 60 (one, two, three, four, five, six, or more) are applied on the fibers 40. It is within the scope of the present invention to apply the fiber optic cable(s) to the layers 10, 20, and/or 30 and/or on the tapes 50 and/or beneath a cover like the cover 70. Any known suitable fiber optic cables may be used, including SmartProfile (Trademark) cables from Smartec S/A Company. In one particular aspect a SmartProfile (Trademark) fiber optic cable 61 is used as shown in Fig. 10 which has a body 62, e.g. made of HDPE which encases one or at least two fiber optic cables 63, 64 in filler material 69 within a central space 65 and two additional fiber optic cables 66, 67. Either or both of the cables 63, 64 is used to measure temperature on the liner 12 and either or both of the cables 66, 67 are used to measure strain. The temperature measurements provide information regarding leaks in the liner 12 both regarding the existence of a leak and its location (temperature and strain measurements are done in prior art systems with cables on the outside of a pipe, e.g. a steel pipe). Either cable 63 or 64 may be deleted; but providing two such cables provides redundancy in the event one of them fails.

Fig. 11A shows schematically a system 100 according to the present invention for receiving, processing, and transmitting information based on the signals from fiber optic cables. A pipeline (or pipe) 110 has a liner 112 (like the liner 12 described above or like any liner according to the present invention) with a fiber optic system 114 as described above with fiber optic cables 160 (like the cables 60 described above). The pipeline 110 has a variety of pipeline-associated devices and apparatuses 104 (two shown schematically), each with an operator or controller 106. In one particular aspect, the pipeline 110 has a plurality of apparatuses 104 which are valves that selectively control the flow of fluid through the pipeline and each valve has a controller 106 which is in operational communication with the fiber optic system 114. A measurement system 120 provides a communications interface between the pipeline 110 and a control system 130 (e.g. a pipeline operator's control room with a SCADA system 136). The SCADA system 136 includes a computer system 138 which receives digitized signals from the system 120 which has converted the analog signals from the pipeline 110 into digital form) indicative of temperature and/or strain along the length of the pipeline 110. Either the system 120 or the system 138 has a programmable medium programmed to note an anomaly or spike in either temperature or strain or both. Such an anomaly or spike can indicate a potential leak (temperature spike) or a potential overstress condition or impending liner failure (strain spike) in the pipeline 110. In one aspect the system 130 activates an alarm or alarm system 140 when an alarm value for temperature, strain or both is reached. In one particular aspect, each of the apparatuses 104 is a pipeline valve; an alarm is provided by the system 140 in response to signals from the system 114 (temperature or strain or both measured and indicating a leak at a location between the valves 104), 120, 130; controllers 106 on each valve 104 are activated to close both valves 104; and both valves 104 are closed, isolating the length of the pipeline 110 between the valves.

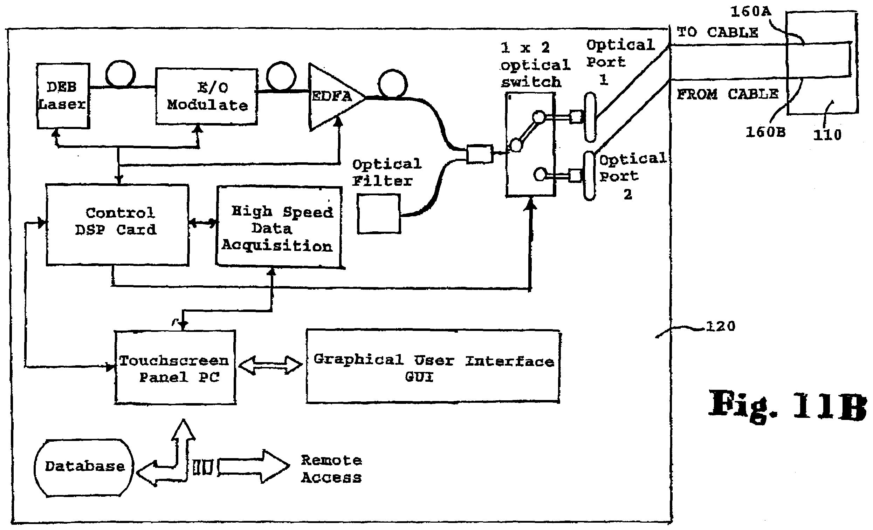

Fig. 11B illustrates schematically one particular embodiment of a system 120 (e.g. a commercially available Model DiTest Model STA 201 from Smartec S/A company) connected to a pipeline 110. Fiber optic cables 160a, 160b are looped as shown or terminated with a reflective end (as may be done with any cable of any system herein). In one aspect, instead of looping the cable, a mirror is provided at the end of the cables 160a, 160b for beam bounce back in the same cable. As shown in Fig. 11B, the prior art measurement system 120 is, according to the present invention, used with the pipeline 110. The measurement system 120 sends a signal (e.g. a laser beam) to and through the upper (as shown in Fig. 11B) fiber optic cable 160a and receives a signal back through the lower (as shown in Fig. 11B) fiber optic cable 160b. The system 120 inputs signals into the fiber optic cables; monitors the return signals; processes the return signals (including A/D conversion); produces digital signals indicative of measured parameters (temperature and/or strain of the pipeline 110) e.g. temperature sensitivity within 4 F. and/or strain sensitivity within 0.002%.

It is old and well-known to use grooves or recesses 71 in a cover 70 as shown in Fig. 1 (see, e.g. U.S. Patent 6,220,079). Optionally, a cover 70 according to the present invention as shown in Fig. 1 may have one, two, three, four, five, six, seven, eight or more interior grooves or recesses 72. Such grooves or recesses are used within a pipeline lined with a pipe liner 12 to provide a space to hold gases from the fluid flowing through the pipeline which permeate through layers of the liner 12.

Optionally, according to the present invention, a cover 70 is provided with no grooves 71 and with no grooves 72. As shown in Fig. 12 a pipe liner 12a (like the pipe liner 12) has one, two, three, four, five, six, seven, eight or more spacers 15 (two shown) over which is applied a cover 70a. The cover 70a has no grooves, interior or exterior, and spaces 73 formed adjacent the spacers 15 provide a volume that can be entered to vent accumulated gases. Alternatively, one or more grooves like the grooves 72 and/or like the grooves 71 may be used with the liner 12a.

As shown in Fig. 13, the spacers 15 may be any desired shape (shapes 15a - 15h shown in cross-section) and they may be made of any material, including, but not limited to metal, metal alloys, non-conducting metals, non-conducting metal alloys, plastic, wood, fiberglass or composite. Any hollow spacer may have a hollow interior, e.g., interiors 15i, 15k, and one or more vent holes, e.g., holes 15j or 151.

When gases permeate a liner 10 and enter into grooves 71, grooves 72 and/or spaces 73, this accumulated gas is removed from the spaces adjacent the grooves or from the spaces 73, e.g. by vacuuming from ports provided along a pipe or pipe line. Such gas permeation is reduced, according to certain embodiments of the present invention, by co-extruding with the first layer 10 a thin layer 17 (shown partially, Fig. 1; encompasses entire length and circumference of the pipe or pipeline) of impermeable material (e.g. 0.060 inches thick) which is on the wetted side (an interior side) of the first layer 10 and serves as a pressure barrier. In one aspect this layer 17 is EVOH (ethylene vinyl alcohol copolymer) or NYLON (Trademark) material. In another aspect, to reduce gas permeation, a thin layer 19 (see Fig. 7; e.g. 0.060 inches thick) of HDPE is co-extruded with the first layer 10. The layer 19 has, optionally, a plurality of nanotubes NT, e.g. functionalized single wall nanotubes throughout the layer 19 (see Fig. 7A) which both inhibit gas permeation through the first layer 10 and which strengthen it. In one aspect, by volume, between about 1% to 5% of a layer is made of these nanotubes; and in one particular aspect about 2%. Optionally a thin layer 13 (shown in dotted line, Fig. 1) of thermoplastic material, e.g. but not limited to SARAN (Trademark) wrap, is used interiorly of the cover or first layer 10. Optionally, a layer 15 (like the layer 19) is wrapped around the or an outermost layer of fabric (e.g. the layer 30, Fig. 4) to help maintain components in place.

In certain materials and certain ballistic materials, e.g. the SPECTRA (Trademark) material creeps (i.e., elongates under loading) which can result in a loss of strength of an overall layer. To strengthen such layers and to reduce creep therein, a plurality of functionalized single wall nanotubes is added to the second layer 20 and/or to the third layer 30 (and/or to any other layer or component). Using functionalized nanotubes from NanoRidge Materials, Inc. results in substantially no increase in weight of a layer or of a component, e.g. of a layer 20 or a layer 30 due to their small size. In certain aspects, by volume these nanotubes are about 1% to 5% of a component or of a layer's total volume and, in one particular aspect, are about 2% of this total volume.

In certain aspects for the layers 10, 20, 30 a mixture of fibers can be used instead of using, e.g. only SPECTRA (Trademark) material fibers. For example, carbon fibers (20% to 50% by volume) can be mixed with SPECTRA (Trademark) fibers. The fabric layer 20 and/or the fabric layer 30 (and/or in any embodiment any reinforcing fabric layer) may have, optionally, a coating on either or both sides thereof to help maintain the fabric in a described position in the liner and with respect to other liner components. In certain aspects such a coating is a low melting point thermoplastic, e.g., but not limited to EVA, HPPE, or LDPE. In one aspect, nanotubes, e.g. the single wall nanotubes in layer 19 are added (e.g. sprayed on) to the fabric before coating to increase fabric strength and to reduce creep or unwanted movement of the fabric. In certain aspects, any fabric layer herein may include foil tape, e.g. aluminum foil, integral with the fabric in strips or pieces, e.g. strips SS shown in Fig. 4. Any fabric layer herein may, optionally, include a binder throughout the fabric to stabilize it and facilitate handling of it; e.g. an EVA binder increases a fabric's coefficient of friction. In those fabrics herein that may have a coating as described above a binder can be used.

In certain aspects the tapes 50 is a thermoset tape, e.g. material of unidirectional carbon fibers impregnated with a thermoplastic binder, e.g. EVA or a thermosetting resin, e.g. epoxy; e.g. in certain particular aspects 1 to 6 inches wide and 0.508 mm to 3.175 mm (0.02 to 0.125 inches) thick, optionally with an epoxy binder throughout.

Fig. 14 illustrates a liner 12b (e.g. as a liner 12a in Fig. 12; and like numerals indicate like parts) which has been folded or deformed into the general "C" shape shown in Fig. 14. The liner 12b is folded, and the tapes 50 are positioned, so that in the folded configuration shown in Fig. 14 a plurality of tapes 50 are generally aligned with each other. With the four tapes 50 as positioned in Fig. 14, pulling of the liner 12b into a pipe or pipeline is facilitated by attaching and pulling at the location of each tape 50. It is within the scope of the present invention to provide one, two, three, four, five, six, seven, eight or more tapes like the tapes 50 aligned on a deformed liner which is deformed into any shape.

As shown in Fig. 14, a liner may have spacers 15 which are located so that they support the cover and/or provide channel(s) for the collection of permeated fluids. In one particular aspect as shown, the spacers 15 provide uniform support for the cover without limiting the ability to deform the liner 12.

Optionally, a connector strip or tape 14 may be used to maintain the liner 12b in its deformed shape as shown in Fig. 14. The strip or tape 14 may be glued, bonded, or adhered to the outer cover of the liner 12b at points as shown to hold the deformed liner in the configuration shown. Any suitable material may be used for the strip or tape 14; e.g.,

adhesive tape; duct tape; polyethylene tape; or a foil or plastic strip whose ends are glued, bonded or adhered to the liner. Such a strip or tape or strips or tapes 14 may be used with a liner deformed into any shape to maintain that shape during a liner installation procedure and/or for handling outside a pipe or pipeline prior to such installation. Upon initiation of re-forming of the liner to a full expanded configuration, the strip 14 breaks relatively easily.

Fig. 15 illustrates schematically a method for producing a pipe liner 12c which has fiber optic cables 60a (like the fiber optic cables 60 or any fiber optic cables described above) which are applied to the liner 12c as the liner 12c is being made to monitor installation effects, e.g. location in a host pipe and/or applied tension. As the liner 12c exits a liner making machine in a production system F, a system MA (e.g. like the system 120 described above) is in communication with the fiber optic cables (as the system 120 is in such communication as described above). By employing mirrors MR at the distal end of the fiber optic cables and/or by using a GPS sensor apparatus GPS (which emits a GPS locator signal transmitted through the fiber optic cables) at the end of the liner 12c, the system MA can determine the distance from the end of the liner 12c at the machine exit to the distal end of the produced liner, thereby providing a measurement of the length of the produced liner 12c. Strain, if there is any on the liner 12c as it is produced is measured providing a measure of the pulling force. Similarly, using a system MA during a liner installation procedure, a measurement is provided which indicates the length of liner installed within a pipe or pipe line; and, in one aspect, a measurement of a strain on a liner as it is pulled into a pipe or pipe line. Any pipe or pipeline herein may have a fiber optic cable or cables with a mirror MR and/or a GPS apparatus as described above.

In one particular embodiment the inner core of a liner according, e.g. a first layer 10, is an extruded pipe including two different thermoplastic layers, an inner "wetted" layer positioned adjacent to flowing fluid and made of a chemically resistant material such as Nylon (TM) material or Evott. An outer layer is made of less chemically resistant material (e.g. HDPE). In one aspect the inner layer is about 20% the thickness of this inner core and the outer layer is about 80%. A cover, e.g. a cover 70, can have a similar structure.

The disclosure, therefore, in certain and not necessarily all embodiments, provides a liner for pipe, the liner including: a first layer comprising a hollow cylinder of polymeric material; a second layer comprising wrap material, the wrap material wrapped around the first layer; a third layer comprising wrap material wrapped around the second layer, in one aspect the third layer at an angle to the second layer or the third layer not at an angle; the liner having a first end spaced apart from a second end and at least one strengthener member on the liner and extending from the first end to the second end of the liner; the liner being a stand-alone structure. Such a liner may have one or some, in any possible combination, of the following: wherein the polymeric material is thermoplastic material; wherein the polymeric material is thermoset material; wherein the wrap material of the second layer is oriented HMWPE fibers; wherein the wrap material of the third layer is oriented HMWPE fibers; wherein the second layer is wrapped without overlap on the first layer; wherein the third layer is wrapped without overlap on the second layer; wherein the at least one strengthener member is any of tape, sock, and flattened tube; wherein the at least one strengthener member is made of high strength fiber material; wherein the at least one strengthener member is a plurality of members spaced-apart around a circumference of the first layer; a plurality of fiber members wound around and outside of the at least one strengthener member to maintain the at least one strengthener member in position on the liner; at least one fiber optic cable extending along the liner; wherein the at least one fiber optic cable provides communication between the liner and an apparatus; a protective cover, e.g. wound on, sprayed on, or painted on and around the liner; wherein the at least one fiber optic cable is connectible for communication with a measurement system for measuring temperature; wherein at least one fiber optic cable is connectible for communication with a measurement system for measuring strain; wherein the at least one fiber optic cable is connectible for communication with a measurement system for measuring temperature and strain; wherein the protective cover is made of polymeric material; wherein the first layer is at a first angle substantially equal to and opposite to a second angle of the second layer; wherein the second layer is bonded at discrete points or over substantially all its surface to the first layer; wherein the third layer is bonded at discrete points or over substantially all its surface to the second layer; wherein the second layer is bonded to the first layer at discrete points and the third layer is bonded to the second layer at discrete points; a plurality of standoff members disposed beneath and in contact with the cover; wherein the liner is deformable into a deformed shape for insertion into a pipe; wherein the shape is a general "C" shape; a plurality of spacer members beneath and in contact with the cover for supporting the cover without limiting deformability of the liner; and/or wherein the cover has a plurality of interior recesses for venting fluid permeating through the liner.

The disclosure, therefore, in certain and not necessarily all embodiments, provides a continuous fabric reinforced stand alone pipe liner fabricatable in situ, the pipe liner having a longitudinal axis, and including discrete lengths of polymeric tubular extrusions welded together with welds to form a continuous cylindrical hollow member with a first end and a second end, at least two layers of reinforcement of a high strength low weight strengthening material, said at least two layers of reinforcement applied axially from the first end to the second end of the continuous cylindrical hollow member, wherein each of said layers has a layer width and each of said layers provides coverage of the continuous cylindrical hollow member, wherein each of said layers is wound on the continuous cylindrical hollow member at a wind angle , wherein the continuous cylindrical hollow member has an outside diameter, said coverage satisfying the equation (for one width N = 1; for multiple widths, N = number of fabric widths used):

$$Coverage = WN / \pi D cos\emptyset$$

where W is the width of the fabric, N is the number of layers of fabric, D is the outside diameter of the pipe liner and Ø is the fabric winding angle. N = 1 for one layer.

Such a pipe liner may have coverage of 100% and the angle between 50 degrees and 60 degrees; and/or such a pipe liner may include at least one pulling members or a plurality of pulling member applied on the pipe liner from the first end to the second end, either not parallel to the longitudinal axis or substantially parallel to the longitudinal axis of the pipe liner.

The present invention, therefore, in certain and not necessarily all embodiments, provides a method for lining a pipe, the method including pulling a liner into a pipe, the liner as any disclosed herein. In certain aspects of such a method, the liner is a continuous stand-alone structure at least three, four, five or ten miles long.

The disclosure, therefore, in certain and not necessarily all embodiments, provides a method for operating a controller of an apparatus on a pipeline, the method including receiving with a control system a measurement signal from a measuring system in communication with a pipeline, the pipeline having an outer pipe structure and a liner therewithin, the liner as any disclosed herein with at least one fiber optic cable extending along the liner, and a protective cover on and around the liner, and a measuring system receiving signals from the at least one fiber optic cable indicative of any of temperature within and strain on the pipeline, and controlling the controller with the control system in response to the signals.

In one particular aspect there is discloseda system for reinforcing a continuous plastic pipe with a layer or layers of fabric of reinforcing fibers or tape. The fabric being wrapped is concentric (surrounds) the plastic pipe liner (longitudinal axis) before winding. The plastic pipe is moved through the apparatus. A roll of fabric is positioned about the axis of the translating plastic pipe and fabric is drawn from the outside diameter of the roll by rollers on arms of a deflection arm assembly that rotate at a controlled speed and with adjustable fabric tension. The arms take the fabric and reorient it to the winding or wrapping angle. In certain aspects the positioning arms are adjustable for fabric width and angle within a range from 40 to 70 degrees. The fabric width is determined by the "Coverage" formula discussed above.

In certain aspects tape is used instead of fabric. The tape has a matrix material that encapsulates fibers (or in which the fibers are embedded). In fabrics the fibers are not encapsulated or embedded in a matrix. Reinforcing wrapping material includes fabric and tape.

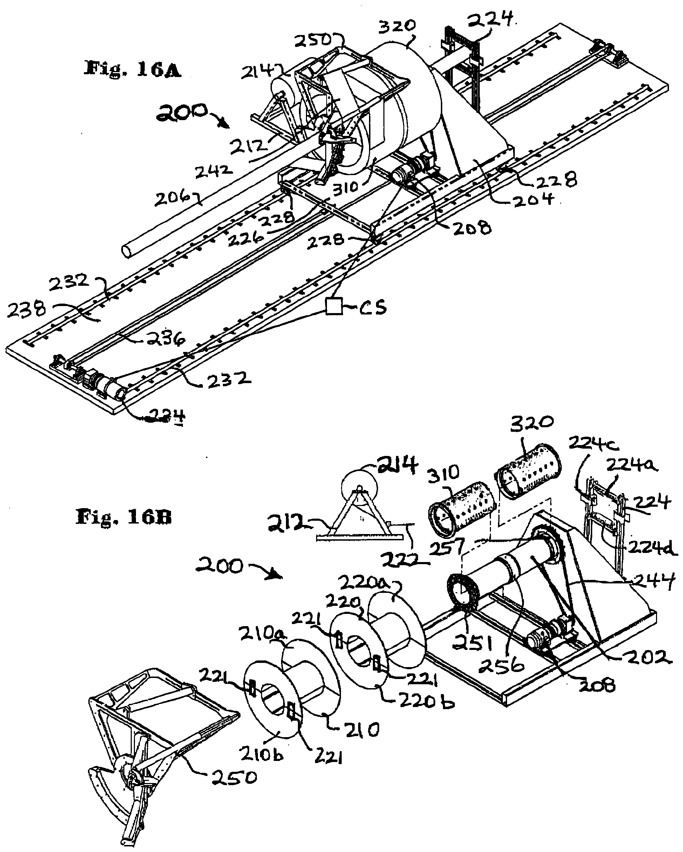

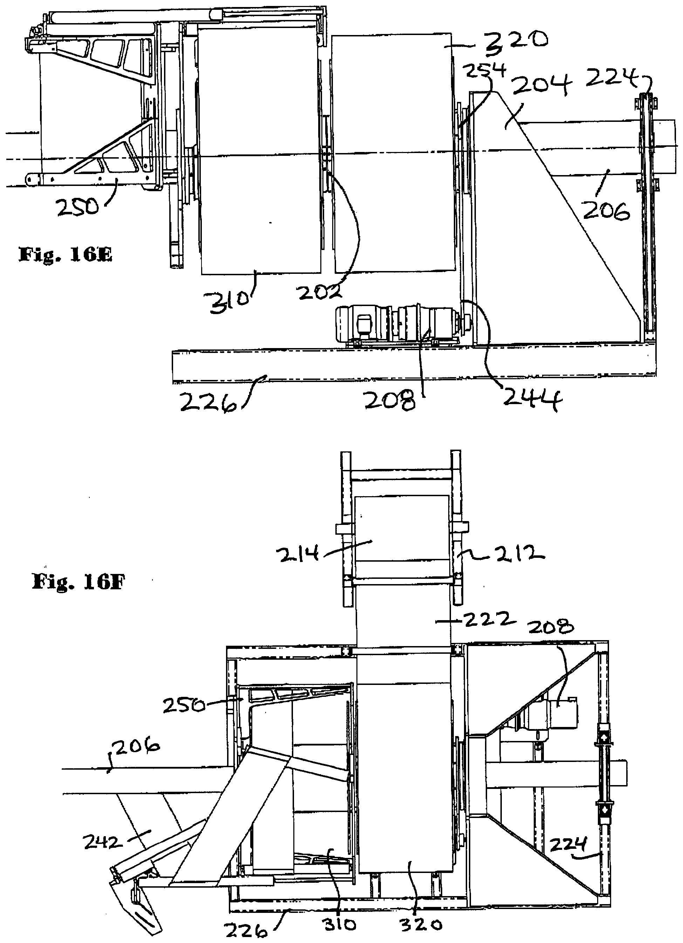

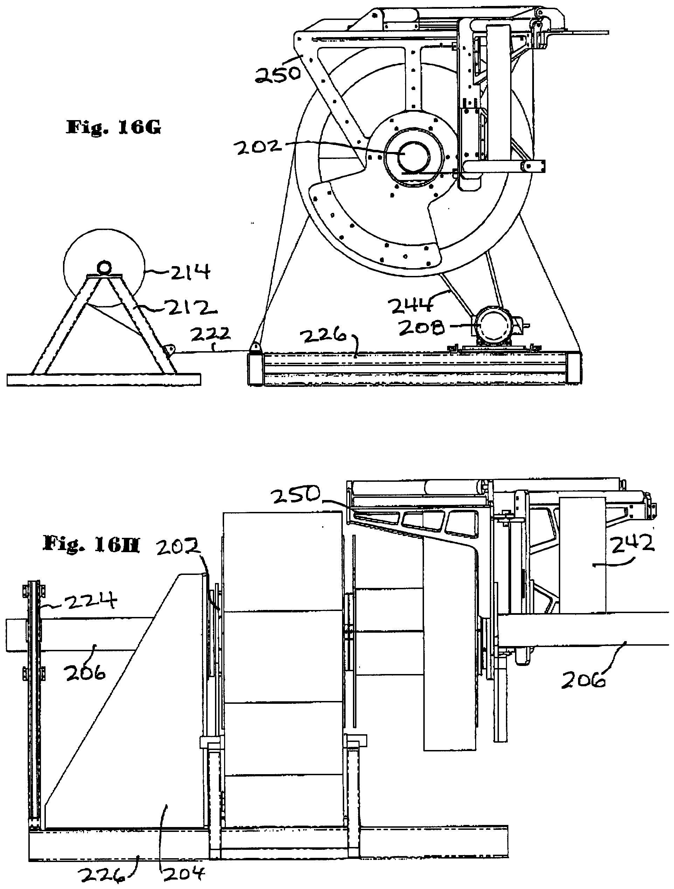

Figs. 16A - 21I illustrate one embodiment of a system 200 for wrapping material on pipe. The system 200 has a main shaft 202 connected to and supported by a support frame 204. Two cores 210, 220 have material (fabric or tape) wound thereon that is provided for wrapping onto a plastic pipe 206. The core 210 is a payout core from which a deflection arm assembly 250 receives material 242 and wraps the material 242 onto the pipe 206. The core 220 is a rewind core which is movable to replace the payout core 210 upon emptying of the payout core 210. Each core 210, 220 is made of two halves, 210a, 210b and 220a, 220b, respectively, which are releasably connected together, e.g. with fasteners, screws, and/or (as shown) with releasably cooperating hook-and-loop fastener material, e.g. VELCRO (TM) material 221. Each core 210, 220 is removably mounted and rotatable with respect to a corresponding concentric shaft 310, 320. The concentric shafts 310,320 are rotatably and movably mounted on the main shaft 202. The concentric shafts 310, 320 are rotatable independently of each other. A removable end flange 251 maintains the concentric shafts on the main shaft 202.

A motor 208 with a chain 244 rotates the concentric shaft 320 on the main shaft 202 to wrap material 222 from a rewind stand 212 onto the rewind core 220. The rewind stand 212 has a rotatable roll 214 of material 222 which is fed onto the rewind core 220. The chain 244 engages a sprocket 257 which is connected to the main shaft 202 and which is adjacent a sprocket attachment flange 254. A sprocket attachment flange 254 is connected to the shaft 202 and maintains the drive chain 244 in position on the sprocket 257.

Bearings 256 press fit on the main shaft facilitate rotation of the concentric shaft 320 on the main shaft 202.

Pipe supports 224 (one shown) with a plurality of rollers 224a, b, c, d support the plastic pipe 206 as it moves through the system. (Of course the pipe may be non-plastic, metal, composite, fiberglass, etc.) For example, on site the pipe 206 may be made, e.g., extruded with an extrusion machine, and the pipe, as it is produced, is then fed to the system 200. Optionally, the support frame 204 is secured on a base 226 which has rotatable rollers 228 for movement on tracks 232 secured on a support 238. A motor 234 moves a chain or belt 236 which is attached to the base 226 to move the base 226, e.g., while pipe is still being provided to the system 200 and wrapping of material has temporarily ceased so that a full rewind core may be moved into position to replace an empty payout core. The system 200 is moved along the tracks as the pipe moves so that, when the new payout core is in position for wrapping to resume, the wrapping can be continued at the point on the pipe where wrapping was stopped for core replacement. Thus the pipe production operation can be carried on without stopping and the wrapping operation can be done continuously without stopping.

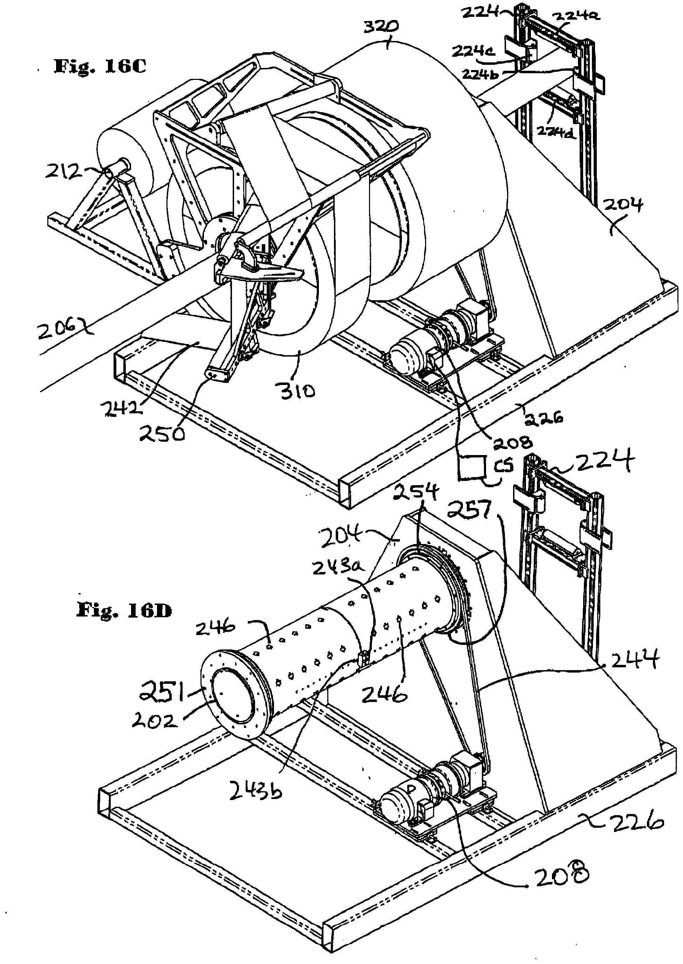

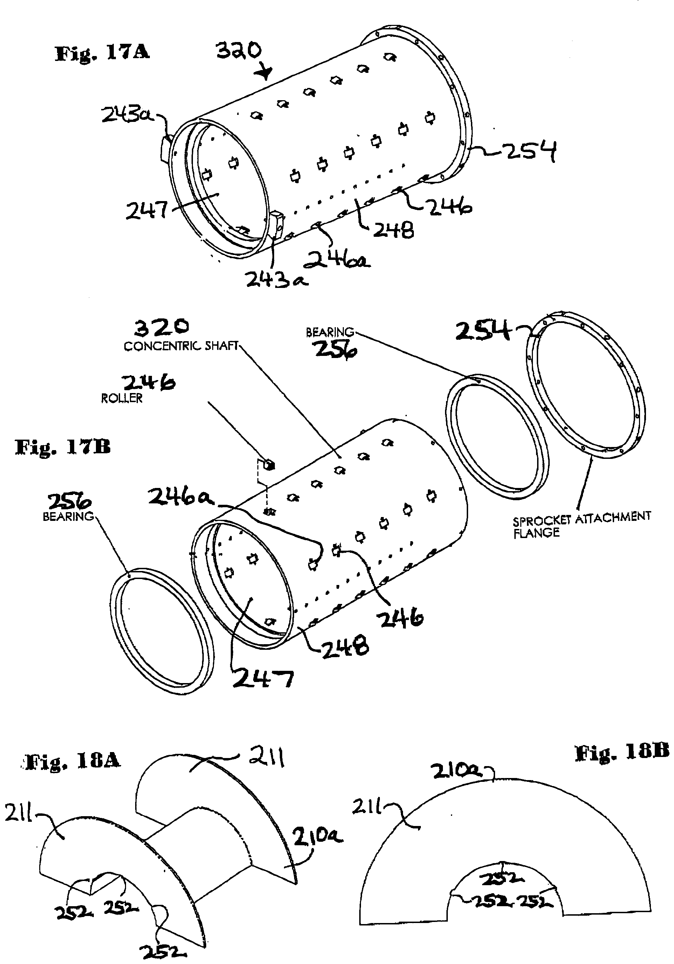

As shown in Figs. 16D, 17A and 17B, the concentric shafts 310, 320 each has a plurality of rollers 246 rotatably mounted thereon so that a portion 246a of each roller projects beyond an outer surface 248 of the shaft parts. The outwardly projecting roller portions 246a are received in and rotate in corresponding grooves 252 in the interior of the cores 210, 220 (see Figs. 18A, 18B) which extend along the entire length of the cores 210, 220. Optionally the grooves 252 are metal lined. The concentric shaft 320 has the same general structure as the concentric shaft 310. The shaft 320 has tapped holes to mount the sprocket attachment plate; and the shaft 310 has an access hole for securing the outer bearing. Stops 243a, 243b, Figs. 16D and 17A, stop the cores 210, 220 from sliding off the ends of the shafts.

This roller/groove structure facilitates movement of and insures proper positioning of the cores 210, 220 on the concentric shafts 310, 320. Each core part 210a, 210b, 220a, 220b has the grooves 252. One to six or more such grooves may be used on a core. In one aspect the core parts 210a, 210b, 220a, 220b are single pieces molded from moldable material such as fiberglass, each with side flanges 211.

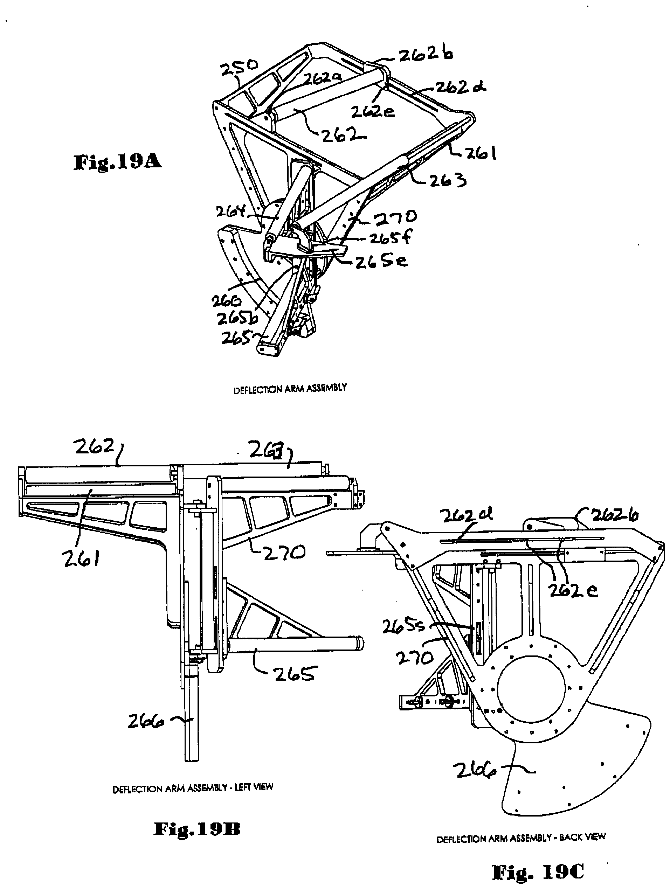

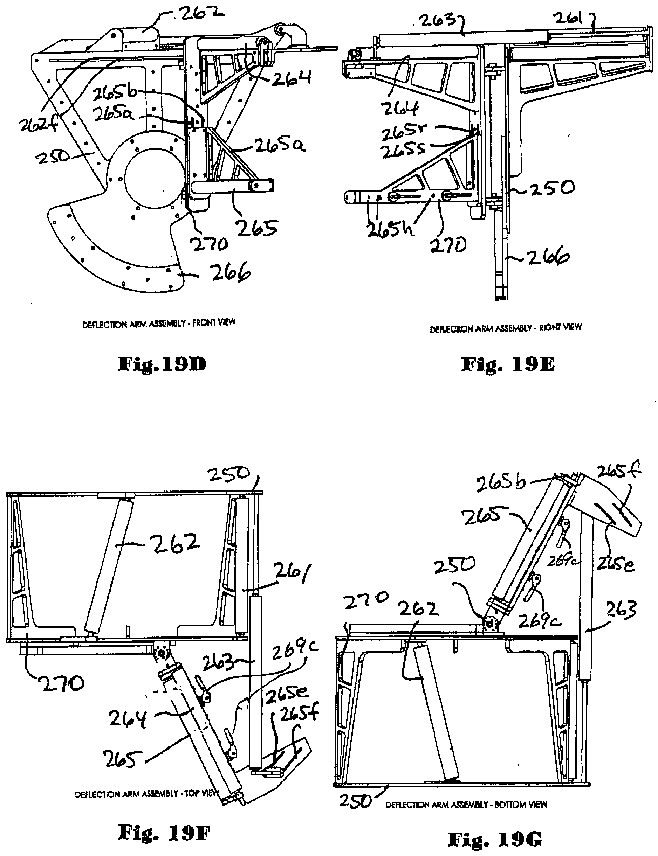

The deflection arm assembly 250 as shown, e.g., in Figs. 16A, 16C and Figs. 19A - 19G, has an arm frame 270 and is rotatable with respect to the core 210 from which it takes the material 242 and wraps it on the pipe 206. In order to receive the material 242 from the core 210 and then wrap it at an angle on the pipe 206, the material 242 is passed over and around a series of rollers 261 - 265. Each roller 261 - 265 is rotatably mounted to the arm frame 270. The arm frame 270 is rotated with shaft 207 by the motor 208 around the pipe 206. For smooth rotation, a counterweight member 266 is connected to or formed integrally of the arm frame 270. As shown, the rollers 261 - 265 are positioned at desired angles to the arm frame 270 so that the deflection arm assembly 250 moves the material 242 at a desired tension from the core 210 and is applied at a desired angle to the pipe 206. The position of the rollers 262, 264 and 265 is adjustable to take into account differences in fabric, tape, or pipe and to adjust the wind angle at which material is wrapped onto the pipe.

Position of the roller 262 is adjustable by releasing bolts 262a (one shown) and moving the roller 262 to a desired position. By loosening bolts 262e, 262f which ride in slots 262c, 262d, position of the roller 262 is adjusted.

Adjustability of the position of the rollers 264, 265 is provided by selectively positioning a roller mount 265a by moving it in slots 265b, 265c in part of the frame 270. This adjustment permits the material to leave the deflection arm assembly at a desired tangent to the pipe.

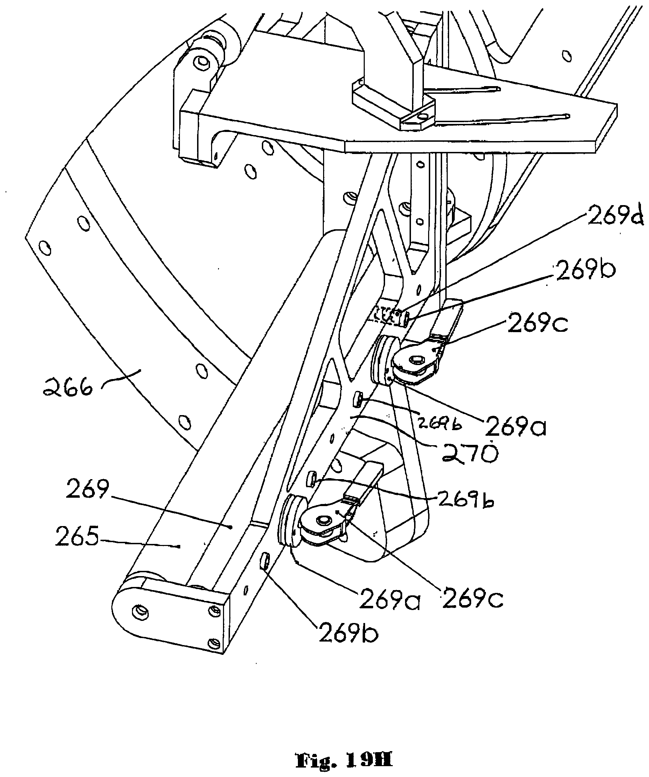

A pivot mount 265c has a series of holes 265h, e.g. with 2 degree increments to allow for various wind angles. The rollers 264, 265 are pivoted and located so that the material coming off them will be at a correct wind angle. Vertical adjustment in slots 265r, s is to accommodate various size pipes. In one aspect, material comes off the core on tangent to the bottom or top of the pipe. The pivoting adjustability of the rollers provides for adjustment of the wind angle of the material. In one aspect, the method of adjustment includes setting the angle of the rollers 264 and 265 at the pivot point to match the wind angle. Each pivot has 11 holes 265h with 2 degree spacing with a pin 265k to secure it in the correct location. This provides a 20 degree range of adjustment, e.g. from 53 degrees to 73 degrees. Roller 265 is moved up or down to match the diameter of the pipe. The position of the roller 262 is adjusted along the slots to center the web of material on the rollers 265 and 265. Tension is applied from the friction in the concentric shaft, and through a tension bar 269 (see Fig. 19H) which is aligned with roller 265. The material slides between the roller 265 and the tension bar 269. The position of the tension bar 269 is adjustable to provide a desired gap between the tension bar 269 and the roller 265. The gap depends on the thickness of the material. Forcing the material through this gap causes tension. By reducing the size of the gap, tension is increased. The gap setting is adjustable using gap setting screws 269a and movable levers 269c connected to the tension bar 269. Four springs 269d (one shown in dotted line, Fig. 19H) provide adjustable tension on the bar 269 via rotatable screws 269b. Rollers 262 and 263 are, optionally, fixed so that they cannot rotate. The roller 265 is a "gripping roller" which is engaged to hold the fabric in place when fabric runs out on the putout roll. The tension bar 269 springs 269d are compressed during normal running so that the gap between the tension bar 269 and the roller 265 sets the tension. The cam operated lever 269c can release the springs and allow them to push the tension bar 269 against the material and trap it between the tension bar 269 and the roller 265.

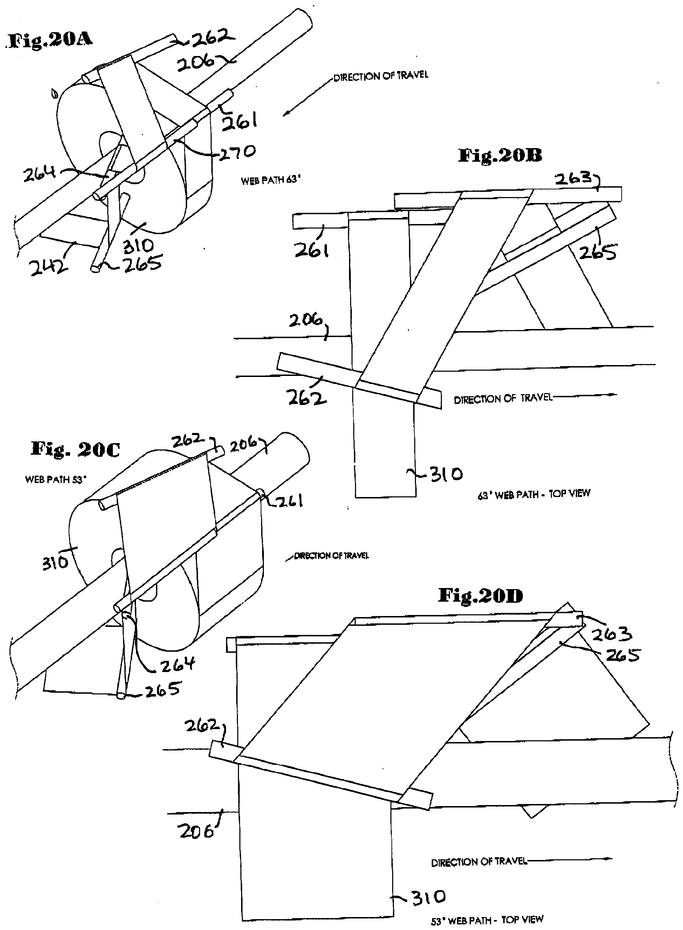

Figs. 20A - 20D illustrate a variety of wind angles for applying material to a pipe with a system like the system 200. As shown in Figs. 20A and 20B material 242 is applied to the pipe 206 at a positive wind angle of 63 degrees. As shown in Figs. 20C and 20D material is applied to the pipe 206 at a positive wind angle of 53 degrees.

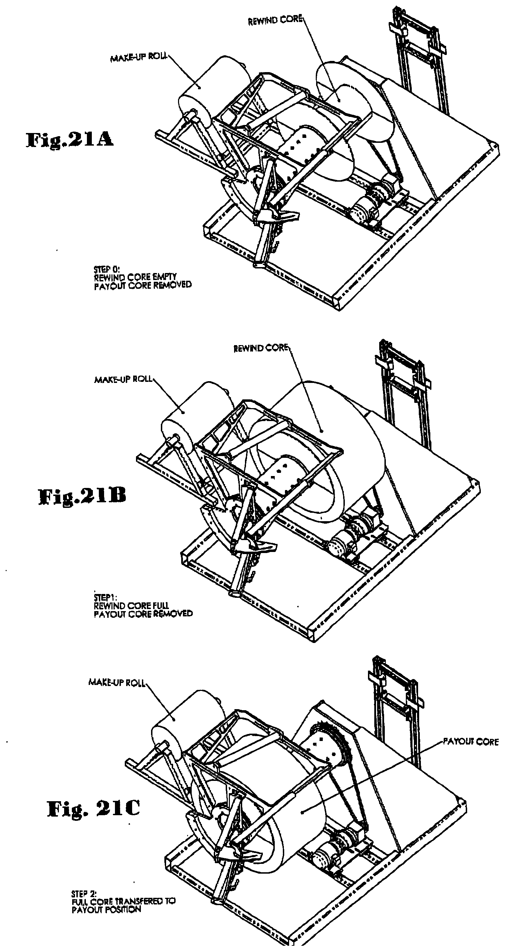

Figs. 21A - 21I illustrate steps in a wrapping method using the system 200. As shown in Fig. 21A the rewind core 220 is empty and the core 210 has been removed. As shown in Fig. 21B the rewind motor 208 was activated and material from the rewind stand 212 has filled the rewind core 220.

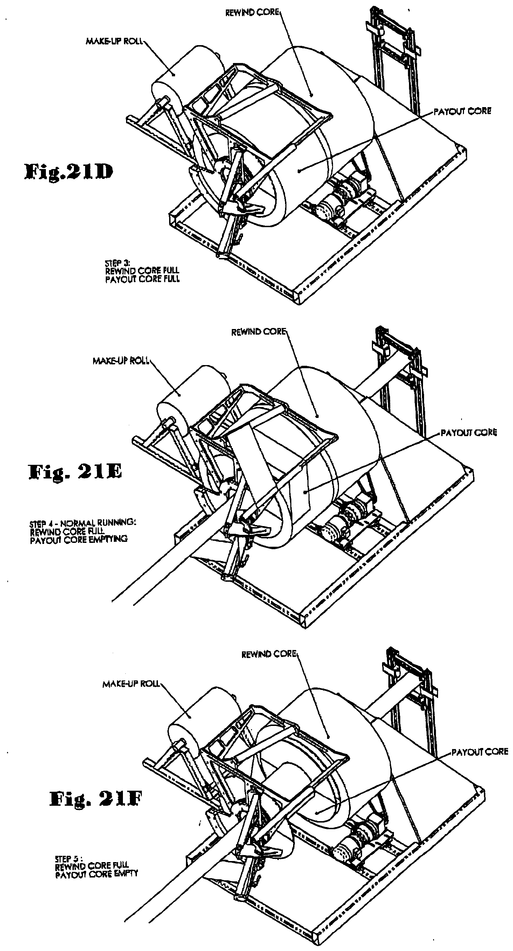

Fig. 21C illustrates the transfer of the filled core 220 to the payout core position by moving the core on the rollers 246 on the concentric shafts. The core which previously was a rewind core 220 is now a payout core 210. As shown in Fig. 21D two split core halves have been secured together to form a new rewind core 220 and the new rewind core 220 has been filled with material. Fig. 21E illustrates the wrapping of material on the pipe 206 with the core 220 full and with material being taken from the core 210 by the deflection arm assembly 250. The core 220 rotates with respect to the main shaft as the deflection arm assembly wraps material onto the pipe. As shown in Fig. 21F, the core 210 has been emptied.

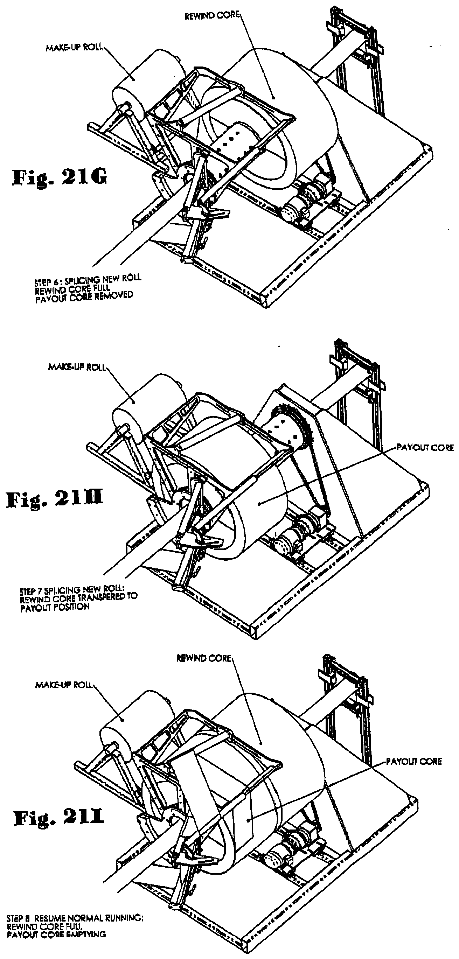

Fig. 21G illustrates removal of the split halves 210a, 210b in preparation to move the full rewind core 220 into the payout core 210 position.

As shown in Fig. 21H the full rewind core 220 has been moved to the payout core's position and is now a payout core 210. The end of material on the new payout core 210 is spliced onto the end of material that has been wrapped on the pipe, e.g. using a high strength quick core adhesive. Simultaneously split core parts 220a, 220b are emplaced on the concentric shaft 320 producing a new rewind core 220 onto which material is then wound. Fig. 21I illustrates that split core parts have been emplaced and secured on the concentric shaft 320, a new rewind core 220 has been filled with material, and the wrapping of material 242 on the pipe has been resumed as the payout core 210 supplies the material 242 to wrap the pipe. While the deflection arm 250 is rotating/wrapping, the rewind core can be replaced and/or filled without shutting down the system.

The angular relationship or wind angle of material onto a pipe to be wrapped is adjusted and maintained by using the control system to coordinate the rotational speed of the deflection arm assembly 250 with the linear speed of the pipe moving through the system 200. In certain aspects the pipe speed is between 1 to 20 feet per minute and the wind speed is between 1 and 50 RPM. The wind angle is a function of the line speed, wind speed, and pipe diameter. The formula is $R = (S/(PI()*D))*Tan(a)$ ; where R is the rotational speed, S is line speed in in/min, D is wind diameter in inches, and a is the wind angle. For an 203.2 mm (8") pipe and a line speed of 0.02 m/s (48"/min), the deflection arm assembly rotates at 3.75 RPM to achieve a 63 degree wind angle.

During operation as illustrated in Figs. 21A - 21I, when the material on a payout core runs out, the rotation of the deflection arm assembly 250 is stopped and a gripping roller engages the end of the material that was being wrapped on the pipe. Simultaneously, the motor 234 is activated by a control system CS (shown schematically, Fig. 16C) and the base 226 begins to move in the direction of and at the same speed as the moving pipe so that the system 200 is maintained in a fixed relationship with the pipe so that wrapping can resume as soon as a new payout core is in position. Thus the track system serves as an accumulator and allows time for core change over. In one particular aspect the tracks are 80 feet long allowing about 20 minutes for core change over (at 4'/min line speed).

While the base 226 is moving on the tracks, the empty payout core parts are disconnected and removed from the concentric shaft 310 and the adjacent full rewind core 220 is moved into position to become the new payout core. Rewinding of a newly-installed rewind core can proceed at a significantly higher speed than rotation of the deflection arm assembly 250 (e.g., in one aspect, 50 to 100 RPM for rewind as compared to 1.5 to 20 RPM for wrapping; and in one particular aspect 100 RPM rewind, 5 RPM wrapping). Rewind is done with the material under tension and the material is locked down (e.g., but not limited to, by taping down an end of the material) so this tension is maintained. The control system CS controls the motor 234. In one aspect, a liner encoder indicates pipe speed, a rotary encoder indicates motor speed, and a PLC electronic systems uses their inputs to achieve the desired speed of the base 226.

In one particular aspect material 16 inches wide is applied to pipe with an outer diameter of 203.2 mm (8 inches). In another aspect material 203.2 mm (8 inches) wide is applied to pipe with an outer diameter of 114.3 mm (4½ inches) .

BACKRGROUND

This aspect of the disclosure relates an apparatus and method for the installation of reinforced thermoplastic liners in pipelines, whether during the initial manufacturing of the pipeline, or in later renovation, upgrade or repair. In either case, the useful life of the pipeline is increased by the added burst strength of the liner and the corrosion protection afforded by the liner. To protect against damage to existing pipelines, corrosion resistant thermoplastic liners have been used to eliminate the need for excavating and replacing pipeline, which can be very costly.

The use of thermoplastic liners for protecting the interior of a pipeline has been disclosed in numerous references beginning with French Patent, 81 07346 (Laurent) and pipelining processes are further exemplified in U.S. Pat. No.; 4,496,449; 4,394,202; 4,207,130; 4,985,196; and 3,429,954. However, these processes have proven to be only somewhat successful in relatively low-pressure pipelines with application in existing pipelines of no more than one to two miles in length.

In the past, essentially two types of liners for pipelines, Loose fitting liners and tight fitting liners, were used. A loose fitting liner has been described as one that contains the pressure of the fluid or gas in the liner. A tight fitting liner is flush against and tightly engaged with the interior wall of the pipeline. The tight fitting liner is physically supported by the pipeline and so may depend on the strength of the pipeline to contain the pressure of the fluid or gas in the pipeline. Tight fitting liners offer certain advantages over loose fitting liners in that they may be less expensive, they do not have to bear significant loads, and they maintain the greatest possible inside diameter. Several methods of installing tight fitting liners are described in U.S. Pat. No. 5,072,622; 3,856,905 ; 3,9 59,424; and 3,462,825.

Unfortunately, there are problems with tight fitting liners. Although a tight fitting liner protects the interior of the pipeline from corrosion it does not protect the exterior of the pipeline. Corrosion damage may weaken the physical strength of the pipeline to the point where it is unable to bear the pressure within and cause leakage. Since the traditional tight fitting liner depends on the strength of the pipeline to contain the pressure of the fluid or gas in the pipeline, if the pipeline fails, the liner will fail. Failure of the liner and pipe will result in significant replacement cost and may be catastrophic to the environment depending on the nature of the substance contained in the pipeline.

Thus, repairing an existing pipeline by installing a liner as heretofore available does not solve all the problems associated with pipelines. These problems have been addressed by designing a liner with multi layers with sufficient strength to contain the pressure of the pipeline within which the liner is fitted and by incorporating leak detection and stress monitoring systems in the liner as disclosed in U.S. Pat. No. 5,551,484 (Charboneau). An alternative leak detection system for a tight fitting liner is disclosed in U.S. Pat. No. 5,072,622 (Roach, Whitehead) as well as the use of annular channels as disclosed in U.S. Pat. No. 6,220,079 (Taylor, Roach).

Even after the problems of burst strength and monitoring were addressed, there was another problem. Typically most processes for insertion of a liner in a pipeline involve the step of deforming or temporarily folding the liner into a cross section smaller than the receiving pipeline so that the liner might be drawn or pulled through the pipeline and eventually restored to its full cylindrical cross section and tightly fitting within the pipeline as disclosed in U.S.Pats.5,395,472, 5,810,053 and 5,861,116 (Mandich). It can be seen that the length of liner, which could be installed intact, was limited by the longitudinal strength of the liner itself. In many oil and gas pipelines, particularly offshore where the length of the pipeline may exceed several miles, the installation of high burst strength tight fitting liners was impossible.

SUMMARY OF THIS ASPECT OF THE DISCLOSURE

The disclosure provides an apparatus and method for the continuous installation of a temporarily folded multi layer reinforced thermoplastic liner assembly with integral monitoring systems in a pipeline exceeding one mile in length, expanding the temporarily folded liner assembly to its original shape and taking steps to insure that the liner tightly fits in the pipeline.

The core inner liner of the thermoplastic liner assembly may be either extruded from thermoplastic material to form a continuous tube or finite lengths of thermoplastic pipe are fused together to form a continuous tube. This continuous tube which forms the core inner liner of the thermoplastic liner assembly is pulled through orbital winding devices which wind at least two reinforcing strength layers on the outer surface of the core inner liner and wind more than one intermediate layers over the reinforcing strength layers. The reinforcing strength layers and intermediate layers are intended to increase the radial burst strength of the thermoplastic liner assembly and achieve sufficient strength to contain the pressure of the pipeline within which the thermoplastic liner assembly is installed.

While the core inner liner is being pulled through the orbital winding devices, at least two tension deformation members are longitudinally installed in proximity to the reinforcing strength layers and secured by the intermediate layers. The tension deformation members are flexible high strength members which serve a dual purpose. The first is to provide the necessary tensile strength to withstand the tensile force needed to pull a thermoplastic liner assembly through a pipeline several miles long. The second purpose is to help maintain the thermoplastic liner assembly in a temporarily folded or deformed configuration by virtue of the extreme tension in the tension deformation members when the thermoplastic liner assembly is being pulled through a pipeline.

Concurrently with the installation of the tension deformation members, a variety of instrumentation circuits may be installed in parallel to the tension deformation members, likewise along the longitudinal axis of the thermoplastic liner assembly in proximity to the reinforcing strength layers and secured by the intermediate layers. These instrumentation circuits may include a variety of transponder, communication, censoring, vacuuming, optic fiber, electrical, capacitance, thermal or other elements, none of which would be damaged by the extreme tension needed to pull the thermoplastic liner assembly through miles of pipeline.

The core inner liner with orbitally wound layers, tension deformation members and instrumentation circuits is then wrapped with an outer liner which may have single or multiple layers of thermoplastic material. The outer surface of the outer liner may be provided with grooves or channels creating annular passageways between the thermoplastic liner assembly and the pipeline for monitoring, inspecting, permeated gas removal and communication. Likewise the inner surface of the outer liner may be provided with grooves or channels to achieve the same functions as the grooves or channels on the outer surface.

As a next step in the installation of the thermoplastic liner assembly in a pipeline, the thermoplastic liner assembly is folded into a "C" or "U" or a "W" cross sectional shape by a deformation device, typically a series of rollers and wheels.

The pulling end of the thermoplastic liner assembly is fitted to a pulling head which is connected to a pulling cable which will be drawn through the pipeline by a tensioning device such as a winch at the completion end of the pipeline. The pulling head and cable are connected to allow the primary pulling force to be exerted on the tension deformation members alone and not on any of the other elements of the thermoplastic liner assembly. It is intended that the tension deformation members under tension will create a centering effect which will serve to hold the thermoplastic liner assembly in its temporarily folded or deformed cross sectional shape until it is reshaped to tightly fit within the pipeline. Temporary tabs may also be used to assist in holding the thermoplastic liner assembly in its deformed shape until it is reshaped to tightly fit within the pipeline.

It is an object of the disclosure to provide an improved liner assembly for installation in a pipeline of cylindrical cross section, said pipeline having an inner surface and an outer surface and having a beginning end and a completion end, said liner assembly having a longitudinal axis and a pulling end and initially manufactured with cylindrical cross section that is temporarily folded to facilitate insertion and installation in a pipeline by a tensioning device pulling on the pulling end of the liner assembly, said liner assembly further comprising a core inner liner with an inner surface and an outer surface, at least two strength layers orbitally wound upon the outer surface of the core inner liner; more than one intermediate layers orbitally wound over the strength layers, at least two tension deformation members to sustain the tension generated by the tensioning device during installation in a pipeline and to assist in causing the liner assembly cross section to remain temporarily folded during installation in the pipeline, said tension deformation members longitudinally placed in proximity to and secured by the intermediate layers; at least one instrumentation circuit longitudinally placed in proximity to and secured by the intermediate layers; and an outer liner with an inner surface and an outer surface placed over the intermediate layers.

It is a further object of the disclosure to provide an improved method for installation of an improved liner assembly in a pipeline of cylindrical cross section, said pipeline having an inner surface and an outer surface and having a beginning end and a completion end, said liner assembly having a longitudinal axis, and a pulling end and initially manufactured with cylindrical cross section that is temporarily folded to facilitate insertion and installation in a pipeline by a tensioning device pulling on the pulling end of the liner assembly; comprising the steps of: providing a continuous length of core inner liner of cylindrical cross section with an inner surface and outer surface; orbitally winding at least two strength layers upon the outer surface of the core inner liner; orbitally winding more than one intermediate layer over the strength layers; longitudinally placing at least two tension deformation members in proximity to and secured by the intermediate layers, wherein said tension deformation members sustain the tension generated by the tensioning device during installation in a pipeline and assist in causing the liner cross section to remain temporarily folded during installation in the pipeline; longitudinally placing at least one instrumentation circuit in proximity to and secured by the intermediate layers; placing and longitudinally sealing an outer liner with an inner surface and an outer surface over the intermediate layers; temporarily folding the liner to create a cross section of less area than the pipeline cross section to facilitate insertion and installation of the liner in the pipeline; placing a pulling head on the pulling end of the liner and fixedly attaching said pulling head to a tensioning device; engaging said tensioning device to pull pulling head from beginning end of pipeline and drawing liner assembly through pipeline to completion end of pipeline; and disengaging tensioning device from pulling head and reforming liner to cylindrical cross section thereby engaging outer surface of outer liner with inner surface of pipeline.

## BRIEF DESCRIPTION OF THE DRAWINGS

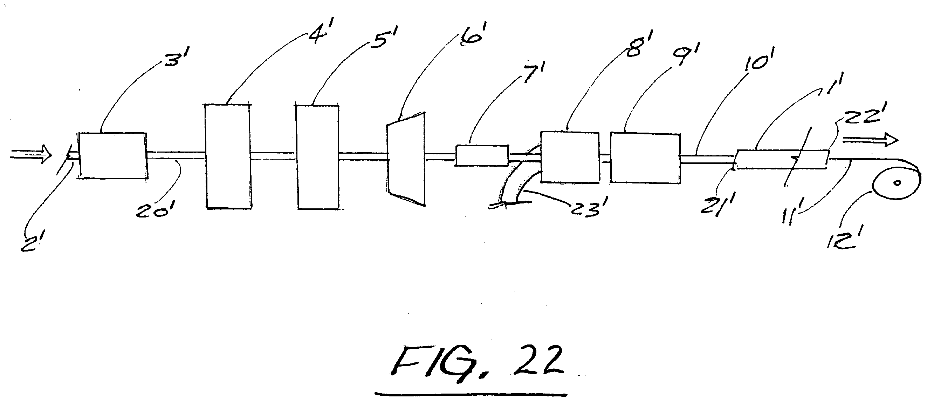

Fig. 22 is a block diagram of the installation of the liner assembly.

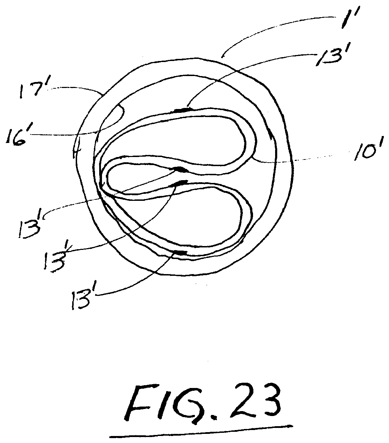

Fig. 23 is a perspective view of an embodiment of the liner assembly in a temporarily folded condition for purposes of insertion into a pipeline.

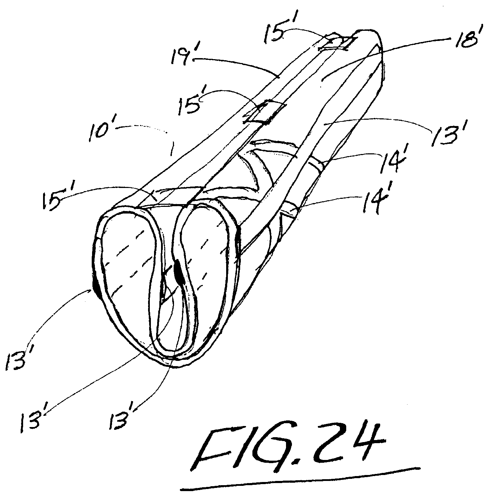

Fig. 24 shows a cross section of a pipeline with a temporarily folded liner assembly being drawn through the pipeline.

## DETAILED DESCRIPTION OF THE INVENTION

Fig. 1 illustrates a block diagram of the installation of the liner assembly in a pipeline I'. In the installation depicted in Fig. 1, the improved liner assembly is manufactured on site and pulled directly into the pipeline 1'. Pipelines of between 50.8 mm (2") and 1.52 m (60") diameter can be rehabilitated.

In the embodiment depicted in Fig. 1, discreet lengths of thermoplastic pipe 2' are pulled into a butt fusion machine 3' and fused to a preceding length of thermoplastic pipe 2' to form a continuous tube 20' as the core inner liner of the thermoplastic liner assembly. The continuous tube 20' is then drawn through a series of orbital winders 4' and 5' which orbitally wind reinforcing strength layers around the continuous tube 20'. A third orbital winder 6' orbitally winds intermediate layers around the reinforcing strength layers while installing at least two tension deformation members 13' as shown in Figs. 2 and 3, and installing such instrumentation circuits as may be desired.

The continuous tube 20' is drawn along by at least one puller 7'. Once the continuous tube 20' has been orbitally wound with strength layers and intermediate layers, and fitted with tension deformation members 13' and instrumentation circuits, it is then wrapped with an outer liner 23' which is longitudinally fused by a longitudinal welding machine 8'. Both the inner and outer surfaces of the outer liner 23' may be fitted with grooves or channels for annular monitoring, inspecting, permeated gas removal and communication.

Once fitted with an outer liner 23', the thermoplastic liner assembly, now fully assembled, is drawn through a deformation machine 9' and continuously folded into a "C", "U", or "W" cross section 10'. The beginning end of the temporarily folded thermoplastic liner assembly 10' designated as the pulling end is then drawn into the beginning end 21' of a pipeline 1' and pulled by a pulling cable 11' being drawn by a tensioning device 12' at the completion end 22' of the pipeline 1'.

The pulling cable 11' is attached to the pulling end of the temporarily folded thermoplastic liner assembly 10' by a pulling head, not shown, which is tied directly onto the tension deformation members 13', and configured to induce a centering effect on the temporarily folded thermoplastic liner assembly 10'. The primary pulling force of the pulling head will be transferred to the tension deformation members 13' alone. Once the temporarily folded thermoplastic liner assembly 10' has been drawn through the pipeline 1' from the beginning end 21' to the completion end 22', the tensioning device 12' and pulling head are disengaged from the pulling end of the temporarily folded thermoplastic liner assembly 10' and the thermoplastic liner assembly is reformed to a cylindrical cross section wherein the outer surface of the outer liner 23' engages the inner surface 16' of the pipeline 1' shown in Fig. 3.

Fig. 2 depicts a perspective view of one embodiment of the thermoplastic liner assembly in a temporarily folded condition 10' with a right folded side 18' and a left folded side 19'. The outer liner 23' is not shown in Fig. 2 to better illustrate the tension deformation members 13'. In this embodiment there are shown four tension deformation members 13', and, as illustrated, the tension deformation members 13', line up opposite each other when the thermoplastic liner assembly is temporarily folded. This configuration is intended to assist in creating a centering force or "Chinese finger" effect to hold the temporarily folded thermoplastic liner assembly 10 in its folded condition when tension is applied to the tension deformation members 13' by the pulling head as the temporarily folded thermoplastic liner assembly 10' is pulled through the pipeline 1' by the pulling cable 11'.

Also shown in Fig. 2 are partial depictions of the orbitally wound layers 14' which may be either strength layers or intermediate layers. Also shown are alternative holding straps 15' between the right folded side 18' and the left folded side 19', intended to hold the thermoplastic liner assembly in its temporarily folded condition in addition to the centering effect produced by the tension deformation members 13'. These holding straps 15' are designed to shear or disconnect when the temporarily folded thermoplastic liner assembly 10' is expanded to its original shape to achieve a tight fit within the pipeline 1'. The holding straps 15' may be attached by adhesives or a fusion process.

Fig. 3 illustrates a cross section of a pipeline 1' with the temporarily folded thermoplastic liner assembly 10' being pulled through the pipeline 1' which has an outer surface 17' and an inner surface 16'. As shown in Fie. 2 this embodiment has four tension deformation members 13'.

The preferred thermoplastic material for the core inner liner and outer liner is high-density polyethylene (HDPE), but other thermoplastics may be used.

It is preferred that the reinforcing strength layers be orbitally wound to coincide with the angle of stress in the wall of a thin pressure vessel known to be 54.7 degrees from the longitudinal axis, and that the strength layers be wound in opposite directions or opposite hand to assure uniformity of reinforcement.

It is also preferred that the wound layers 14', both strength and intermediate, be made of high strength material or a combination of high strength materials such as KEVLAR®, SPECTRA®, or VECTRAN® whether in fiber or tape form. Likewise, the tension deformation members 13' must be of high strength material or a combination of high strength materials such as KEVLAR® or SPECTRA® or VECTRAN® or carbon fiber.

The pulling cable 11' is preferably a high strength synthetic cable such as PLASMA® 12' Strand by Puget Sound Rope.

It is also intended that adhesive or other fusion techniques may be used to install or enhance the installation of any of the wound layers 14', the tension deformation members 13', or any of the instrumentation circuits installed in the thermoplastic liner assembly.

It is also intended that the outer liner of the thermoplastic liner assembly may be grooved on one or both sides for creating annular passageways between the thermoplastic liner assembly and the pipeline or between the outer liner and the intermediate layer for monitoring, inspecting, permeated gas removal and communication.

**Claims**

1. A liner (12) for installation within a host pipeline, the host pipeline for transporting potentially explosive, flammable, and/or toxic liquids such as crude oil, and gases such methane and propane, over long distances and at high pressures, such as above $8.0 \times 10^6$ Pa, the liner comprising
   a first layer (10) comprising a hollow cylinder of polymeric material having sufficient flexibility to be compressed, deformed and re-formed,
   a second layer (20) comprising wrap material, the wrap material wrapped around the first layer,
   a third layer (30) comprising wrap material wrapped around the second layer,
   the liner having a first end spaced apart from a second end,
   at least one strengthener member (50) on the liner and extending from the first end to the second end of the liner,
   wherein the at least one strengthener member is an axial tape or flattened tube, and

a plurality of fiber members (40) wound around and outside of the at least one strengthener member, wherein said second layer (20) is helically wrapped around said first layer (10) and said third layer (30) is helically wrapped around said second layer in a direction opposite thereto, whereby said second and third layers provide reinforcement to said liner and said at least one strengthener member (50) provides axial reinforcement to said liner to facilitate pulling into said pipeline,

the arrangement being such that, in use, said liner comprises a stand-alone structure that is capable of withstanding operating and installation loadings, and that is deformable into a deformed shape to facilitate installation in said pipeline, said plurality of fiber members (40) helping to maintain the positioning of said at least one strengthener member (50) relative to said second and third layers, and facilitating the integrity of said liner while it is being installed in said pipeline.

2. The liner of claim 1 wherein the polymeric material is thermoplastic material.

3. The liner of claim 1 or 2, wherein the polymeric material is thermoset material.

4. The liner of claim 1, 2 or 3, wherein said wrap material comprises a fabric reinforcement material.

5. The liner of claim 4, wherein the fabric reinforcement material comprises a para-aramid material having a weight-to-volume ratio of 1412 kg/m$^3$.

6. The liner of claim 4, wherein the fabric reinforcement material comprises a carbon fiber reinforced material having a weight-to-volume ratio of 1412 kg/m$^3$.

7. The liner of any of claims 1 to 6, wherein the thickness of the first and second layers is between 0.25mm and 6.10mm.

8. The liner of claim 7, wherein the thickness of the first and second layers is 0.61mm.

9. The liner of any preceding claim, wherein said second and/or third layer comprises a plurality of functionalised single wall nanotubes.

10. The liner of claim 9, wherein said plurality of functionalised single wall nanotubes is about 1% to 5% of the second and/or third layer's total volume respectively, and optionally about 2%.

11. The liner of any preceding claim, wherein said first and/or second layer comprises a mixture of fibers.

12. The liner of claim 11, wherein the mixture of fibers comprises carbon fibers, optionally 20% to 50% by volume.

13. The liner of any preceding claim, wherein the first layer and/or the second layer has a coating on either or both sides thereof.

14. The liner of claim 13, wherein the coating comprises a low melting point thermoplastic, and optionally either ethylene-vinyl acetate (EVA) or low-density polyethylene (LDPE) .

15. The liner of any preceding claim, wherein the second and/or third layer comprises strips or pieces of foil tape.

16. The liner of any preceding claim, wherein the second and/or third layer comprises a binder throughout the fabric reinforcement wrap material.

17. The liner of any of claims 1 to 16, wherein the second layer (20) is wrapped without overlap on the first layer (10).

18. The liner of any preceding claim, wherein the third layer (30) is wrapped without overlap on the second layer (20) .

19. The liner of any preceding claim, wherein the at least one strengthener member (50) is made of high strength fiber material.

20. The liner of any preceding claim, wherein the at least one strengthener member (50) is a plurality of members spaced-apart around a circumference of the first layer (10).

21. The liner of any preceding claim, further comprising at least one fiber optic cable (60) extending along the liner.

22. The liner of claim 21, wherein the at least one fiber optic cable (60) provides communication between the liner and an apparatus.

23. The liner of claim 21 or 22, further comprising a protective cover (70) on and around the liner.

24. The liner of claim 21, 22 or 23, wherein the at least one fiber optic cable (60) is connectible for communication with a measurement system for measuring temperature.

25. The liner of claim 21, 22 or 23, wherein the at least one fiber optic cable (60) is connectible for communication with a measurement system for measuring strain.

26. The liner of any of claims 21, 22 or 23, wherein the at least one fiber optic cable (60) is connectible for communication with a measurement system for measuring temperature and strain.

27. The liner of claim 25 wherein the protective cover (70) is made of polymeric material.

28. The liner of any preceding claim, wherein the second layer (20) is at a first angle and the third layer (30) is at a second angle, and the first angle is substantially equal to and opposite to the second angle.

29. The liner of any preceding claim, wherein the second layer (20) is bonded to the first layer (10).

30. The liner of any preceding claim, wherein the third layer (30) is bonded to the second layer (20).

31. The liner of any preceding claim, wherein the second layer (20) is bonded to the first layer (10) at discrete points and the third layer (30) is bonded to the second layer (20) at discrete points.

32. The liner of any of claims 23 to 27, further comprising a plurality of standoff members disposed beneath and in contact with the cover (70).

33. The liner of any preceding claim, wherein said deformed shape is a general "C" shape.

34. The liner of any of claims 23 to 27, further comprising a plurality of spacer members (15) beneath and in contact with the protective cover (70) for supporting the protective cover without limiting deformability of the liner.

35. The liner of any of claims 23 to 27, or 32 to 34, wherein the protective cover (70) has a plurality of interior recesses (73) for venting fluid permeating through the liner.

36. The liner of any preceding claim, wherein said plurality of fiber members (40) comprises a first set of tows wound at a positive helical wind angle around the axis of the liner and a second set of tows wound at a negative helical wind angle around the axis of the liner.

37. The liner of any preceding claim, wherein said stand-alone structure can carry fluid at an operating pressure of up to about $1.38 \times 10^7$ Nm$^{-2}$ (2000psi).

38. The liner of any preceding claim, wherein said liner is a continuous structure of at least three miles long.

39. A method for lining a pipeline, the method comprising the step of pulling a liner (12) as claimed in any preceding claim into a pipe.

40. The method of claim 39, wherein the liner (12) is a continuous stand-alone structure at least three miles long, and the method comprises pulling said continuous stand-alone structure into said pipeline in a single pull.

41. A method according to claim 39 or 40, further comprising the step of fabricating said liner on-site at a location at which said liner is to be installed within said pipe.

42. A method according to claim 41, further comprising the step of fabricating one part of said liner whilst another part of said liner is pulled into said pipeline.

43. A method according to any of claims 39 to 42, further comprising the steps of deforming said liner prior to said pulling step, and once positioned axially within said pipeline re-forming said liner to its normal shape.

**Patentansprüche**

1. Liner (12) zur Installation innerhalb einer Host-Rohrleitung, wobei die Host-Rohrleitung für den Transport von potentiell explosiven, entflammbaren und/oder toxischen Flüssigkeiten, wie beispielsweise Rohöl, und Gasen, wie beispielsweise Methan und Propan, über große Entfernungen und bei hohen Drücken, wie beispielsweise über 8,0 x $10^6$ Pa, vorgesehen ist, wobei der Liner Folgendes umfasst:

   eine erste Schicht (10), die einen Hohlzylinder aus Polymermaterial mit ausreichender Flexibilität umfasst, um komprimiert, verformt und neu geformt zu werden;
   eine zweite Schicht (20), die Wickelmaterial umfasst, wobei das Wickelmaterial um die erste Schicht gewickelt ist;
   eine dritte Schicht (30), die Wickelmaterial umfasst, das um die zweite Schicht gewickelt ist;
   wobei der Liner ein erstes Ende aufweist, das von einem zweiten Ende beabstandet ist;
   zumindest ein Verstärkungselement (50) an dem Liner, das sich von dem ersten Ende zu dem zweiten Ende des Liners erstreckt, wobei das zumindest eine Verstärkungselement ein axiales Band oder ein abgeflachtes Rohr ist; und
   eine Vielzahl von Faserelementen (40), die um das und außerhalb des zumindest einen Verstärkungselements gewickelt sind,
   wobei die zweite Schicht (20) schraubenlinienförmig um die erste Schicht (10) gewickelt ist und die dritte Schicht (30) schraubenlinienförmig um die zweite Schicht in einer dazu entgegengesetzten Richtung gewickelt ist, wodurch die zweite Schicht und die dritte Schicht dem Liner Verstärkung verleihen; und
   das zumindest eine Verstärkungselement (50) dem Liner axiale Verstärkung verleiht, um das Einziehen in die Rohrleitung zu erleichtern,
   wobei die Anordnung derart ist, dass bei der Verwendung der Liner eine eigenständige Struktur umfasst, die in der Lage ist, Betriebs- und Installationsbelastungen standzuhalten und die in eine verformte Form verformbar ist, um die Installation in der Rohrleitung zu erleichtern, wobei die Vielzahl von Faserelementen (40) dazu beiträgt, die Positionierung des zumindest einen Verstärkungselements (50) relativ zu der zweiten und dritten Schicht beizubehalten, und die Integrität des Liners fördert, während der Liner in der Rohrleitung installiert wird.

2. Liner nach Anspruch 1, wobei das Polymermaterial ein thermoplastisches Material ist.

3. Liner nach Anspruch 1 oder 2, wobei das Polymermaterial duroplastisches Material ist.

4. Liner nach Anspruch 1, 2 oder 3, wobei das Wickelmaterial ein Gewebeverstärkungsmaterial umfasst.

5. Liner nach Anspruch 4, wobei das Gewebeverstärkungsmaterial ein Para-Aramid-Material umfasst, das ein Gewicht-zu-Volumen-Verhältnis von 1412 kg/m$^3$ aufweist.

6. Liner nach Anspruch 4, wobei das Gewebeverstärkungsmaterial ein kohlenstofffaserverstärktes Material umfasst, das ein Gewicht-zu-Volumen-Verhältnis von 1412 kg/m$^3$ aufweist.

7. Liner nach einem der Ansprüche 1 bis 6, wobei die Dicke der ersten Schicht und der zweiten Schicht zwischen 0,25 mm und 6,10 mm beträgt.

8. Liner nach Anspruch 7, wobei die Dicke der ersten Schicht und der zweiten Schicht 0,61 mm beträgt.

9. Liner nach einem der vorangegangenen Ansprüche, wobei die zweite Schicht und/oder die dritte Schicht eine Vielzahl funktionalisierter einwandiger Nanoröhren umfasst.

10. Liner nach Anspruch 9, wobei die Vielzahl der funktionalisierten einwandigen Nanoröhren jeweils etwa 1% bis 5% des Gesamtvolumens der zweiten Schicht und/oder der dritten Schicht und wahlweise etwa 2% beträgt.

11. Liner nach einem der vorangegangenen Ansprüche, wobei die erste Schicht und/oder die zweite Schicht ein Gemisch von Fasern umfasst.

12. Liner nach Anspruch 11, wobei das Gemisch von Fasern Kohlenstofffasern, wahlweise 20 bis 50 Vol.-%, umfasst.

13. Liner nach einem der vorangegangenen Ansprüche, wobei die erste Schicht und/oder die zweite Schicht eine Beschichtung auf einer oder auf beiden Seiten davon aufweist.

14. Liner nach Anspruch 13, wobei die Beschichtung einen Thermoplast mit niedrigem Schmelzpunkt und wahlweise entweder Ethylen-Vinylacetat (EVA) oder Polyethylen niedriger Dichte (LDPE) umfasst.

15. Liner nach einem der vorangegangenen Ansprüche, wobei die zweite Schicht und/oder die dritte Schicht Streifen oder Stücke von Folienband umfassen.

16. Liner nach einem der vorangegangenen Ansprüche, wobei die zweite Schicht und/oder die dritte Schicht ein Bindemittel über das gesamte Gewebeverstärkungs-Wickelmaterial umfassen.

17. Liner nach einem der Ansprüche 1 bis 16, wobei die zweite Schicht (20) ohne Überlappung auf die erste Schicht (10) gewickelt ist.

18. Liner nach einem der vorangegangenen Ansprüche, wobei die dritte Schicht (30) ohne Überlappung auf die zweite Schicht (20) gewickelt ist.

19. Liner nach einem der vorangegangenen Ansprüche, wobei das zumindest eine Verstärkungselement (50) aus hochfestem Fasermaterial hergestellt ist.

20. Liner nach einem der vorangegangenen Ansprüche, wobei das zumindest eine Verstärkungselement (50) eine Vielzahl von Elementen ist, die um einen Umfang der ersten Schicht (10) herum beabstandet sind.

21. Liner nach einem der vorangegangenen Ansprüche, des Weiteren umfassend zumindest ein faseroptisches Kabel (60), das sich entlang des Liners erstreckt.

22. Liner nach Anspruch 21, wobei das zumindest eine faseroptische Kabel (60) die Kommunikation zwischen dem Liner und einer Vorrichtung bereitstellt.

23. Liner nach Anspruch 21 oder 22, des Weiteren umfassend eine Schutzabdeckung (70) an dem und um den Liner herum.

24. Liner nach Anspruch 21, 22 oder 23, wobei das zumindest eine faseroptische Kabel (60) zur Kommunikation mit einem Messsystem zur Temperaturmessung anschließbar ist.

25. Liner nach Anspruch 21, 22 oder 23, wobei das zumindest eine faseroptische Kabel (60) zur Kommunikation mit einem Messsystem zur Dehnungsmessung anschließbar ist.

26. Liner nach Anspruch 21, 22 oder 23, wobei das zumindest eine faseroptische Kabel (60) zur Kommunikation mit einem Messsystem zur Temperaturmessung und zur Dehnungsmessung anschließbar ist.

27. Liner nach Anspruch 25, wobei die Schutzabdeckung (70) aus Polymermaterial hergestellt ist.

28. Liner nach einem der vorangegangenen Ansprüche, wobei die zweite Schicht (20) unter einem ersten Winkel und die dritte Schicht (30) unter einem zweiten Winkel liegt und der erste Winkel im Wesentlichen gleich und entgegengesetzt zu dem zweiten Winkel ist.

29. Liner nach einem der vorangegangenen Ansprüche, wobei die zweite Schicht (20) mit der ersten Schicht (10) verbunden ist.

30. Liner nach einem der vorangegangenen Ansprüche, wobei die dritte Schicht (30) mit der zweiten Schicht (20) verbunden ist.

**31.** Liner nach einem der vorangegangenen Ansprüche, wobei die zweite Schicht (20) an diskreten Punkten mit der ersten Schicht (10) verbunden ist und die dritte Schicht (30) an diskreten Punkten mit der zweiten Schicht (20) verbunden ist.

**32.** Liner nach einem der Ansprüche 23 bis 27, des Weiteren umfassend eine Vielzahl von Abstandhaltern, die unterhalb der und in Kontakt mit der Abdeckung (70) angeordnet sind.

**33.** Liner nach einem der vorangegangenen Ansprüche, wobei die verformte Form eine allgemeine "C"-Form ist.

**34.** Liner nach einem der Ansprüche 23 bis 27, des Weiteren umfassend eine Vielzahl von Abstandselementen (15) unterhalb der und in Kontakt mit der Schutzabdeckung (70) zum Abstützen der Schutzabdeckung, ohne die Verformbarkeit des Liners zu begrenzen.

**35.** Liner nach einem der Ansprüche 23 bis 27 oder 32 bis 34, wobei die Schutzabdeckung (70) eine Vielzahl von inneren Ausnehmungen (73) zum Entlüften von durch den Liner hindurchströmendem Fluid aufweist.

**36.** Liner nach einem der vorangegangenen Ansprüche, wobei die Vielzahl von Faserelementen (40) einen ersten Satz von Strängen umfasst, die mit einem positiven schraubenförmigen Wicklungswinkel um die Achse des Liners gewickelt sind, und einen zweiten Satz von Strängen, die mit einem negativen schraubenförmigen Wicklungswinkel um die Achse des Liners gewickelt sind.

**37.** Liner nach einem der vorangegangenen Ansprüche, wobei die eigenständige Struktur Fluid bei einem Betriebsdruck von bis zu etwa $1,38 \times 10^7$ Nm$^{-2}$ (2000 psi) befördern kann.

**38.** Liner nach einem der vorangegangenen Ansprüche, wobei der Liner eine durchgehende Struktur mit einer Länge von zumindest drei Meilen ist.

**39.** Verfahren zum Auskleiden einer Rohrleitung, wobei das Verfahren den Schritt des Einziehens eines Liners (12) nach einem der vorangegangenen Ansprüche in eine Rohrleitung umfasst.

**40.** Verfahren nach Anspruch 39, wobei der Liner (12) eine kontinuierliche, eigenständige Struktur mit einer Länge von zumindest drei Meilen ist und das Verfahren das Einziehen der kontinuierlichen, eigenständigen Struktur in die Rohrleitung in einem einzigen Durchgang umfasst.

**41.** Verfahren nach Anspruch 39 oder 40, des Weiteren umfassend den Schritt der Herstellung des Liners vor Ort an einer Stelle, an der der Liner in der Rohrleitung installiert werden soll.

**42.** Verfahren nach Anspruch 41, des Weiteren umfassend den Schritt des Herstellens eines Teils des Liners, während ein anderer Teil des Liners in die Rohrleitung gezogen wird.

**43.** Verfahren nach einem der Ansprüche 39 bis 42, des Weiteren umfassend die Schritte des Verformens des Liners vor dem Schritt des Einziehens und, sobald der Liner axial innerhalb der Rohrleitung positioniert ist, des Umformens des Liners in seine normale Form.

**Revendications**

**1.** Gaine (12) pour une installation au sein d'une canalisation hôte, la canalisation hôte étant destinée au transport de liquides potentiellement explosifs, inflammables, et/ou toxiques tels que du pétrole brut, et de gaz tels que le méthane et le propane, sur de longues distances et à de hautes pressions, telles qu'au-dessus de $8,0 \times 10^6$ Pa, la gaine comprenant
une première couche (10) comprenant un cylindre creux de matériau polymère ayant une flexibilité suffisante pour être comprimé, déformé et reformé,
une deuxième couche (20) comprenant un matériau d'enveloppement, le matériau d'enveloppement étant enveloppé autour de la première couche,
une troisième couche (30) comprenant un matériau d'enveloppement enveloppé autour de la deuxième couche,
la gaine ayant une première extrémité espacée d'une seconde extrémité,
au moins un organe de consolidation (50) sur la gaine et s'étendant de la première extrémité à la seconde extrémité de la gaine, dans laquelle l'au moins un organe de consolidation est un ruban axial ou tube aplati, et

une pluralité d'organes de fibre (40) enroulés autour et à l'extérieur de l'au moins un organe de consolidation, dans laquelle ladite deuxième couche (20) est enveloppée de manière hélicoïdale autour de ladite première couche (10) et ladite troisième couche (30) est enveloppée de manière hélicoïdale autour de ladite deuxième couche dans une direction opposée à celle-ci, moyennant quoi lesdites deuxième et troisième couches fournissent un renforcement à ladite gaine,

et ledit au moins un organe de consolidation (50) fournit un renforcement axial à ladite gaine pour faciliter une traction dans ladite canalisation,

l'agencement étant tel que, pendant l'utilisation, ladite gaine comprend une structure autonome qui est capable de supporter des chargements de fonctionnement et d'installation, et qui est déformable dans une forme déformée pour faciliter une installation dans ladite canalisation, ladite pluralité d'organes de fibre (40) aidant à maintenir le positionnement dudit au moins un organe de consolidation (50) par rapport auxdites deuxième et troisième couches, et facilitant l'intégrité de ladite gaine pendant qu'elle est en cours d'installation dans ladite canalisation.

2.  Gaine selon la revendication 1, dans laquelle le matériau polymère est un matériau thermoplastique.

3.  Gaine selon la revendication 1 ou 2, dans laquelle le matériau polymère est un matériau thermodurci.

4.  Gaine selon la revendication 1, 2 ou 3, dans laquelle ledit matériau d'enveloppement comprend un matériau de renforcement en étoffe.

5.  Gaine selon la revendication 4, dans laquelle le matériau de renforcement en étoffe comprend un matériau de para-aramide ayant un rapport poids/volume de 1 412 kg/m$^3$.

6.  Gaine selon la revendication 4, dans laquelle le matériau de renforcement en étoffe comprend un matériau renforcé de fibres de carbone ayant un rapport poids/volume de 1 412 kg/m$^3$.

7.  Gaine selon l'une quelconque des revendications 1 à 6, dans laquelle l'épaisseur des première et deuxième couches est entre 0,25 mm et 6,10 mm.

8.  Gaine selon la revendication 7, dans laquelle l'épaisseur des première et deuxième couches est de 0,61 mm.

9.  Gaine selon l'une quelconque des revendications précédentes, dans laquelle lesdites deuxième et/ou troisième couches comprennent une pluralité de nanotubes à paroi simple fonctionnalisés.

10. Gaine selon la revendication 9, dans laquelle ladite pluralité de nanotubes à paroi simple fonctionnalisés est d'environ 1 % à 5 % du volume total des deuxième et/ou troisième couches, respectivement, et éventuellement d'environ 2 %.

11. Gaine selon l'une quelconque des revendications précédentes, dans laquelle lesdites première et/ou deuxième couches comprennent un mélange de fibres.

12. Gaine selon la revendication 11, dans laquelle le mélange de fibres comprend des fibres de carbone, éventuellement 20 % à 50 % en volume.

13. Gaine selon l'une quelconque des revendications précédentes, dans laquelle la première couche et/ou la deuxième couche ont un revêtement sur l'un de leurs côtés ou les deux.

14. Gaine selon la revendication 13, dans laquelle le revêtement comprend un thermoplastique à bas point de fusion, et éventuellement soit de l'éthylène-acétate de vinyle (EVA), soit du polyéthylène basse densité (LDPE).

15. Gaine selon l'une quelconque des revendications précédentes, dans laquelle les deuxième et/ou troisième couches comprennent des bandes ou pièces de ruban métallique.

16. Gaine selon l'une quelconque des revendications précédentes, dans laquelle les deuxième et/ou troisième couches comprennent un liant dans tout le matériau d'enveloppement de renforcement en étoffe.

17. Gaine selon l'une quelconque des revendications 1 à 16, dans laquelle la deuxième couche (20) est enveloppée sans chevauchement sur la première couche (10).

**18.** Gaine selon l'une quelconque des revendications précédentes, dans laquelle la troisième couche (30) est enveloppée sans chevauchement sur la deuxième couche (20).

**19.** Gaine selon l'une quelconque des revendications précédentes, dans laquelle l'au moins un organe de consolidation (50) est constitué d'un matériau de fibres haute résistance.

**20.** Gaine selon l'une quelconque des revendications précédentes, dans laquelle l'au moins un organe de consolidation (50) est une pluralité d'organes espacés autour d'une circonférence de la première couche (10).

**21.** Gaine selon l'une quelconque des revendications précédentes, comprenant en outre au moins un câble à fibres optiques (60) s'étendant le long de la gaine.

**22.** Gaine selon la revendication 21, dans laquelle l'au moins un câble à fibres optiques (60) fournit une communication entre la gaine et un appareil.

**23.** Gaine selon la revendication 21 ou 22, comprenant en outre une couverture de protection (70) sur la gaine et autour de celle-ci.

**24.** Gaine selon la revendication 21, 22 ou 23, dans laquelle l'au moins un câble à fibres optiques (60) peut être connecté pour une communication avec un système de mesure afin de mesurer une température.

**25.** Gaine selon la revendication 21, 22 ou 23, dans laquelle l'au moins un câble à fibres optiques (60) peut être connecté pour une communication avec un système de mesure afin de mesurer un effort.

**26.** Gaine selon la revendication 21, 22 ou 23, dans laquelle l'au moins un câble à fibres optiques (60) peut être connecté pour une communication avec un système de mesure afin de mesurer une température et un effort.

**27.** Gaine selon la revendication 25, dans laquelle la couverture de protection (70) est constituée de matériau polymère.

**28.** Gaine selon l'une quelconque des revendications précédentes, dans laquelle la deuxième couche (20) est à un premier angle et la troisième couche (30) est à un second angle, et le premier angle est sensiblement égal et opposé au second angle.

**29.** Gaine selon l'une quelconque des revendications précédentes, dans laquelle la deuxième couche (20) est liée à la première couche (10).

**30.** Gaine selon l'une quelconque des revendications précédentes, dans laquelle la troisième couche (30) est liée à la deuxième couche (20).

**31.** Gaine selon l'une quelconque des revendications précédentes, dans laquelle la deuxième couche (20) est liée à la première couche (10) en des points discrets et la troisième couche (30) est liée à la deuxième couche (20) en des points discrets.

**32.** Gaine selon l'une quelconque des revendications 23 à 27, comprenant en outre une pluralité d'organes d'écartement disposés au-dessous de la couverture (70) et en contact avec celle-ci.

**33.** Gaine selon l'une quelconque des revendications précédentes, dans laquelle ladite forme déformée est une forme générale en « C ».

**34.** Gaine selon l'une quelconque des revendications 23 à 27, comprenant en outre une pluralité d'organes d'entretoise (15) au-dessous de la couverture de protection (70) et en contact avec celle-ci afin de supporter la couverture de protection sans limiter une déformabilité de la gaine.

**35.** Gaine selon l'une quelconque des revendications 23 à 27, ou 32 à 34, dans laquelle la couverture de protection (70) a une pluralité d'évidements intérieurs (73) afin de ventiler une perméation de fluide à travers la gaine.

**36.** Gaine selon l'une quelconque des revendications précédentes, dans laquelle ladite pluralité d'organes de fibre (40) comprend un premier ensemble d'étoupes enroulées selon un angle d'enroulement hélicoïdal positif autour de l'axe de la gaine et un second ensemble d'étoupes enroulées selon un angle d'enroulement hélicoïdal négatif autour de l'axe de la gaine.

**37.** Gaine selon l'une quelconque des revendications précédentes, dans laquelle ladite structure autonome peut transporter un fluide à une pression de fonctionnement allant jusqu'à environ 1, 38 x $10^7$ Nm$^{-2}$ (2 000 psi) .

**38.** Gaine selon l'une quelconque des revendications précédentes, dans laquelle ladite gaine est une structure continue d'une longueur d'au moins trois miles (4,8 km).

**39.** Procédé de gainage d'une canalisation, le procédé comprenant l'étape de traction d'une gaine (12) telle que revendiquée dans l'une quelconque des revendications précédentes dans un tuyau.

**40.** Procédé selon la revendication 39, dans lequel la gaine (12) est une structure autonome continue d'une longueur d'au moins trois miles (4,8 km), et le procédé comprend la traction de ladite structure autonome continue dans ladite canalisation en une seule traction.

**41.** Procédé selon la revendication 39 ou 40, comprenant en outre l'étape de fabrication de ladite gaine sur site à un emplacement auquel ladite gaine doit être installée au sein dudit tuyau.

**42.** Procédé selon la revendication 41, comprenant en outre l'étape de fabrication d'une partie de ladite gaine tandis qu'une autre partie de ladite gaine est tirée dans ladite canalisation.

**43.** Procédé selon l'une quelconque des revendications 39 à 42, comprenant en outre les étapes de déformation de ladite gaine avant ladite étape de traction, et une fois positionnée axialement au sein de la canalisation, de reformage de ladite gaine à sa forme normale.

**Fig. 1**

50   72   12

10   20

60

30   72

60

72

72

50

72

50

72   17

40

72

60

72

50   72

71   60   71   70

**Fig. 2**

10

**Fig.** WO 2006/064284                                                    PCT/GB2005/050204

**Fig. 4**

**Fig. 5**

**Fig. 6**

**Fig. 7**

**Fig. 7A**

**Fig. 8**

**Fig. 9**

**Fig. 10**

**Fig. 11A**

Fig. 11B

Fig. 12

Fig. 14

Fig. 13

Fig. 15

Fig. 16A

Fig. 16B

Fig. 16C

Fig. 16D

**Fig. 16E**

320

254 204 224

206

250

310 202

226 208 244

**Fig. 16F**

214 212

222 208

250

206

242

224

226 310 320

**Fig. 16G**

250

202

214

212

222

226

244

208

**Fig. 16H** 202

250

242

224

206

206

226 204

Fig. 17A

320

243a

254

247

248

246

246a

243a

---

320
CONCENTRIC SHAFT

BEARING
256

254

246
ROLLER

Fig. 17B

256
BEARING

246a

SPROCKET ATTACHMENT
FLANGE

246

248

247

---

Fig. 18A

211

211

210a

252 252

252

Fig. 18B

210a

211

252

252 252

250
262b
262a
262d
262e
262
261
263
264
270
265f
265e
260
265b
265

DEFLECTION ARM ASSEMBLY

**Fig.19A**

262
261
261
270
265
266

DEFLECTION ARM ASSEMBLY - LEFT VIEW

**Fig.19B**

262d
262b
262e
265s
270
266

DEFLECTION ARM ASSEMBLY - BACK VIEW

**Fig. 19C**

DEFLECTION ARM ASSEMBLY - FRONT VIEW

**Fig. 19D**

DEFLECTION ARM ASSEMBLY - RIGHT VIEW

**Fig. 19E**

DEFLECTION ARM ASSEMBLY - TOP VIEW

**Fig. 19F**

DEFLECTION ARM ASSEMBLY - BOTTOM VIEW

**Fig. 19G**

269d

269b

269c

266

269

265

269b

269a

270

269b

269a

269c

269b

**Fig. 19H**

**Fig.20A**

262
206
DIRECTION OF TRAVEL
261
270
WEB PATH 63°
264
310
242 265

**Fig.20B**

263
261
265
206
262
DIRECTION OF TRAVEL
310
63° WEB PATH - TOP VIEW

**Fig. 20C**

262 206
WEB PATH 53°
261
310
264
265
DIRECTION OF TRAVEL

**Fig.20D**

263
265
262
206
DIRECTION OF TRAVEL
310
53° WEB PATH - TOP VIEW

**Fig.21A**

STEP 0:
REWIND CORE EMPTY
PAYOUT CORE REMOVED

**Fig.21B**

STEP1:
REWIND CORE FULL
PAYOUT CORE REMOVED

**Fig. 21C**

STEP 2:
FULL CORE TRANSFERED TO
PAYOUT POSITION

REWIND CORE

MAKE-UP ROLL

**Fig.21D**

PAYOUT CORE

STEP 3:
REWIND CORE FULL
PAYOUT CORE FULL

REWIND CORE

MAKE-UP ROLL

**Fig. 21E**

PAYOUT CORE

STEP 4 - NORMAL RUNNING:
REWIND CORE FULL
PAYOUT CORE EMPTYING

REWIND CORE

MAKE-UP ROLL

**Fig. 21F**

PAYOUT CORE

STEP 5 :
REWIND CORE FULL
PAYOUT CORE EMPTY

42

**Fig. 21G**

REWIND CORE

MAKE-UP ROLL

STEP 6 : SPLICING NEW ROLL
REWIND CORE FULL
PAYOUT CORE REMOVED

**Fig. 21H**

MAKE-UP ROLL

PAYOUT CORE

STEP 7 SPLICING NEW ROLL:
REWIND CORE TRANSFERED TO
PAYOUT POSITION

**Fig. 21I**

REWIND CORE

MAKE-UP ROLL

PAYOUT CORE

STEP 8 RESUME NORMAL RUNNING:
REWIND CORE FULL
PAYOUT CORE EMPTYING

FIG. 22

EP 1 844 258 B1

FIG. 23

FIG. 24

**EP 1 844 258 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4064211 A
- US 6708729 B
- US 5072622 A
- US 6240612 B
- US 4863365 A
- US 4985196 A
- US 4998871 A
- US 6058978 A
- US 3769127 A
- US 4053343 A
- US 5755266 A
- US 5828003 A
- US 6065540 A
- US 2502638 A
- US 4000759 A
- US 4384595 A
- US 6305423 B
- US 6782932 B
- US 5933945 A
- US 5921285 A

- US 4142352 A
- US 4120324 A
- US 3616072 A
- US 4259139 A
- US 4495018 A
- US 20040144440
- US 351350 A
- US 2002124898 A1
- DE 3610752 A1
- US 6220079 B
- FR 8107346, Laurent
- US 4496449 A
- US 4394202 A
- US 4207130 A
- US 3429954 A
- US 3856905 A
- US 3959424 A
- US 3462825 A
- US 5551484 A, Charboneau